(19) Europäisches Patentamt / European Patent Office / Office européen des brevets

(11) **EP 4 339 919 A1**

(12) **EUROPEAN PATENT APPLICATION**

(43) Date of publication:
**20.03.2024 Bulletin 2024/12**

(21) Application number: **23191617.2**

(22) Date of filing: **16.08.2023**

(51) International Patent Classification (IPC):
**G08G 1/16** *(2006.01)*    **G08G 1/01** *(2006.01)*
**G08G 1/0967** *(2006.01)*    **B60W 30/09** *(2012.01)*
**B60W 30/095** *(2012.01)*

(52) Cooperative Patent Classification (CPC):
**G08G 1/166; B60W 30/09; B60W 30/0956;**
**G08G 1/0112; G08G 1/096708; G08G 1/096775;**
**G08G 1/165**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.09.2022 JP 2022145035**

(71) Applicant: **CANON KABUSHIKI KAISHA**
**Tokyo 146-8501 (JP)**

(72) Inventors:
• **TAKAHASHI, Toshiya**
  **Tokyo, 146-8501 (JP)**
• **OTSUBO, Masatoshi**
  **Tokyo, 146-8501 (JP)**

(74) Representative: **TBK**
**Bavariaring 4-6**
**80336 München (DE)**

(54) **INFORMATION PROCESSING APPARATUS, CONTROL METHOD OF INFORMATION PROCESSING APPARATUS, AND STORAGE MEDIUM**

(57) An information processing apparatus is configured to determine that a moving body has approached a collision hazard area, which is an area in which there is a possibility of collision with a collision factor, acquire a unique identifier list that is stored by associating information of the collision factor with a unique identifier linked to a space in which the collision factor exists, in a case in which it has been determined that the moving body has approached the collision hazard area, and perform control to the moving body so as to avoid a collision with the collision factor, according to the level of collision risk, based on the information of the collision factor that has been stored in the unique identifier list.

## FIG. 14A

1203

| UNIQUE IDENTIFIER | STATIC INFORMATION | | | DYNAMIC INFORMATION | | | | | | | | | | |
|---|---|---|---|---|---|---|---|---|---|---|---|---|---|---|
| | VOXEL POSITION DATA | | | OBJECT RECOGNITION INFORMATION | | | | | | | | | | |
| | LONGITUDE | LATITUDE | HEIGHT | UPDATE DATE/TIME | AUTOMOBILE | | MOTORCYCLE | | BICYCLE | | PERSON | | OTHER | |
| | | | | | DIRECTION | SPEED | DIRECTION | SPEED | DIRECTION | SPEED | DIRECTION | SPEED | DIRECTION | SPEED |
| ⟨ID001⟩ | ○○ | ○○ | ○○ | 20XX/6/20 17:28 | −1 | −1 | −1 | −1 | −1 | −1 | −1 | −1 | −1 | −1 |
| ⟨ID002⟩ | ○○ | ○○ | ○○ | 20XX/6/20 17:28 | −1 | −1 | −1 | −1 | 94 | 0 | −1 | −1 | −1 | −1 |
| ⟨ID003⟩ | ○○ | ○○ | ○○ | 20XX/6/20 17:28 | −1 | −1 | −1 | −1 | 94 | 0 | −1 | −1 | −1 | −1 |

Processed by Luminess, 75001 PARIS (FR)

**(Cont. next page)**

EP 4 339 919 A1

FIG. 14B

ID 001　ID 002　ID 003

15

1202

**Description**

BACKGROUND OF THE INVENTION

Field of the Invention

The present invention relates to an information processing apparatus, a control method of an information processing apparatus, a storage medium, and the like.

Description of the Related Art

In recent years, in line with technological innovations such as autonomous driving mobility and spatial awareness systems around the world, the competition to develop a holistic architecture that connects data and systems among different organizations and members of society (hereinafter, "digital architecture") is intensifying. In Japan as well, the development of digital architecture has become an urgent task.

By utilizing digital architecture, an autonomous driving mobility and spatial awareness system is able to acquire more information, and address greater challenges in conjunction with external devices and systems other than itself. In order to accomplish this, there is a need for a technology for linking real-world spaces and digital information.

As a technology that connects real-world spaces with digital information, there is a conventional temporal-spatial data management system. In Japanese Patent Application Laid-Open Publication No. 2014-2519, a system is disclosed in which a single processor divides a temporal-spatial area in time and space according to temporal-spatial management data provided by a user to generate a plurality of temporal-spatial divided areas. In addition, Japanese Patent Application Laid-Open Publication No. 2014-2519 discloses that the system assigns an identifier expressed as a one-dimensional integer value, for uniquely identifying each of the plurality of temporal-spatial divided areas, taking into account the temporal and spatial proximity of the temporal-spatial divided areas. Furthermore, Japanese Patent Application Laid-Open Publication No. 2014-2519 discloses that the system determines the arrangement of temporal data so that data of temporal-spatial divided areas with similar identifiers is stored in close proximity to each other on a storage apparatus.

However, in Japanese Patent Application Laid-Open Publication No. 2014-2519, there is no reference to a rule of generation of a temporal-spatial divided area, and the data related to the generated area can only be known by an identifier within the processor that generated the temporal-spatial divided area.

In addition, in Japanese Patent Application Laid-Open Publication No. 2014-2519, no reference is made with respect to a specific usage method for different users to use information of a temporal-spatial divided area.

Thus, in order to use such data by sharing among members of different organizations or society (hereinafter, "users"), in addition to understanding the structure of the data in advance, there is a need for each user to reconstruct the existing system to be able to handle the data structure, which may generate a large amount of work.

SUMMARY OF THE INVENTION

The present invention provides an information processing apparatus that uses a temporal-spatial format that can share position information and spatial information that is compatible with various devices.

An information processing device according to one aspect of the present invention include a determination unit that determines that a moving body has approached a collision hazard area, which is an area in which there is a possibility of collision with a collision factor, a list acquisition unit that acquires a unique identifier list that is stored by associating information of the collision factor with a unique identifier linked to a space in which the collision factor exists, in a case in which it has been determined that the moving body has approached the collision hazard area, and a collision avoidance control unit that performs control to the moving body so as to avoid a collision with the collision factor, according to the level of collision risk, based on the information of the collision factor that has been stored in the unique identifier list.

Further features of the present invention will become apparent from the following description of exemplary embodiments with reference to the attached drawings.

BRIEF DESCRIPTION OF THE DRAWINGS

FIG. 1 is a diagram showing an example of the overall configuration of an autonomous moving body control system according to a first embodiment of the present invention.
FIG. 2A is a diagram showing an example of an input screen when a user enters position information, and FIG. 2B is a diagram showing an example of a selection screen for selecting an autonomous moving body that is used.

FIG. 3A is a diagram showing an example of a screen for confirming the current position of an autonomous moving body, and FIG. 3B is a diagram showing an example of a map display screen for confirming the current position of an autonomous moving body.

FIG. 4 is a block diagram showing an example of an internal configuration of each of the apparatuses of FIG. 1.

FIG. 5A is a diagram showing the spatial position relationship in the real world between an autonomous moving body 12 and a column 99 that exists as feature information in the vicinity thereof. FIG. 5B is a diagram showing a state in which the autonomous moving body 12 and the column 99 are mapped to an arbitrary XYZ-coordinate system space with P0 as an origin.

FIG. 6 is a perspective view showing a mechanical configuration example of the autonomous moving body 12 according to the First Embodiment.

FIG. 7 is a block diagram showing a specific hardware configuration of a control unit 10-2, a control unit 11-2, a control unit 12-2, a control unit 13-2, a control unit 14-3, and a control unit 15-2.

FIG. 8 is a sequence diagram explaining the processing executed by an autonomous moving body control system according to the First Embodiment.

FIG. 9 is a sequence diagram that is a continuation of FIG. 8.

FIG. 10 is a sequence diagram that is a continuation of FIG. 9.

FIG. 11A is a diagram showing the latitude/longitude information of the Earth, and FIG. 11B is a perspective view showing a predetermined space 100 of FIG. 11A.

FIG. 12 is a schematic diagram showing spatial information in the space 100.

FIG. 13A is an diagram in which route information is displayed by map information, FIG. 13B is an diagram in which route information using position point group data is displayed by map information, and FIG. 13C is an diagram in which route information using a unique identifier is displayed by map information.

FIG. 14A and FIG. 14B are a diagram explaining how data is stored in a format database 14-4.

FIG. 15A and FIG. 15B are a diagram explaining blind spot accidents.

FIG. 16 is a diagram explaining the search range of a collision factor in a blind spot accident reduction system.

FIG. 17A and FIG. 17B are a diagram in which information that is currently held by the format database 14-4 is mapped.

FIG. 18 is a diagram showing an example of data format transmitted and received by the system control apparatus 10.

FIG. 19A and FIG. 19B are a diagram that represents the intersection as seen from above, and shows a unique identifier that has been assigned to each space.

FIG. 20 is a flowchart showing processing of an area search.

FIG. 21 is a flowchart showing processing of detecting a collision factor from a unique identifier list.

FIG. 22 is a flowchart showing processing of detecting a collision factor in a Third Embodiment.

FIG. 23 is a flowchart showing processing of detecting a collision factor in the Third Embodiment.

FIG. 24 is a diagram explaining a search start point in the Third Embodiment.

DESCRIPTION OF THE EMBODIMENTS

Hereinafter, embodiments of the present invention will be described with reference to the drawings. Note the present invention is not limited by the following embodiments. In each diagram, the identical reference signs are applied to the identical members or elements, and a duplicate description will be omitted or simplified. It should be noted that although an example in which control of an autonomous moving body is applied in the embodiments will be explained, the moving body may be at least one operation unit operable by a user with respect to the movement of the moving body. That is, for example, it may be a configuration in which various displays and the like with respect to the traveling route and the like are provided to the user, and the user performs part of the driving operation of the moving body with reference to such displays.

(First Embodiment)

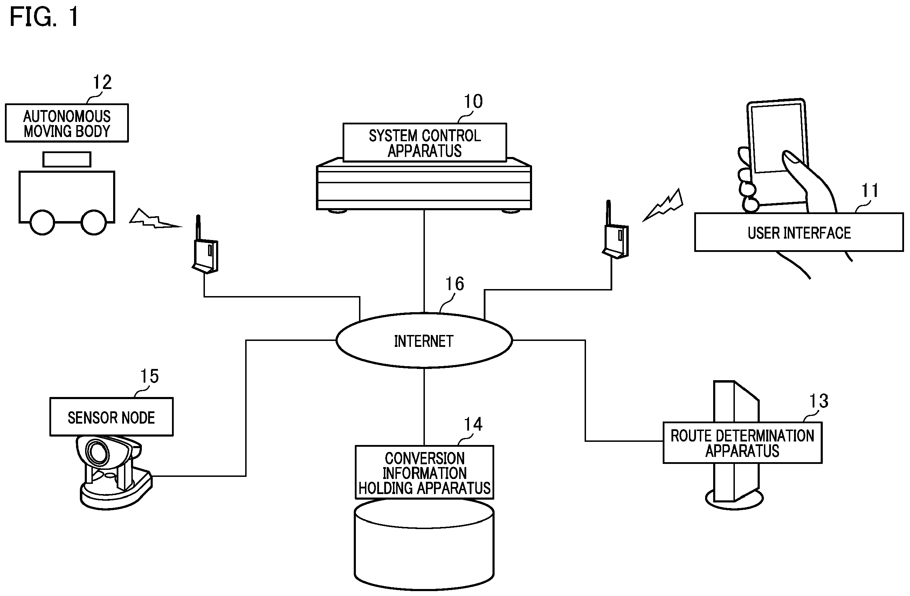

FIG. 1 is a diagram showing an example of the overall configuration of an autonomous moving body control system according to a first embodiment of the present invention. As shown in FIG. 1, the autonomous moving body system (sometimes abbreviated as "control system".) of the present embodiment is provided with a system control apparatus 10, a user interface 11, an autonomous moving body 12, a route determination apparatus 13, a conversion information holding apparatus 14, a sensor node 15, and the like. Here, the user interface 11 means a user terminal device. The system control apparatus 10 is an example of an information processing apparatus.

In the present embodiment, each of the apparatuses shown in FIG. 1 is connected via an Internet 16 by their respective network connection portions, which will be described below. However, other network systems, such as a Local Area Network (LAN) and the like, may be used. In addition, a part of the system control apparatus 10, the user interface 11, the route determination apparatus 13, the conversion information holding apparatus 14, and the like, may be configured as the same apparatus.

The system control apparatus 10, the user interface 11, the autonomous moving body 12, the route determination apparatus 13, the conversion information holding apparatus 14, and the sensor node 15 each include an information processing apparatus comprising a CPU as a computer and a ROM, a RAM, a HDD, and the like as storage media. The functions and internal configuration of each apparatus will be explained in detail below.

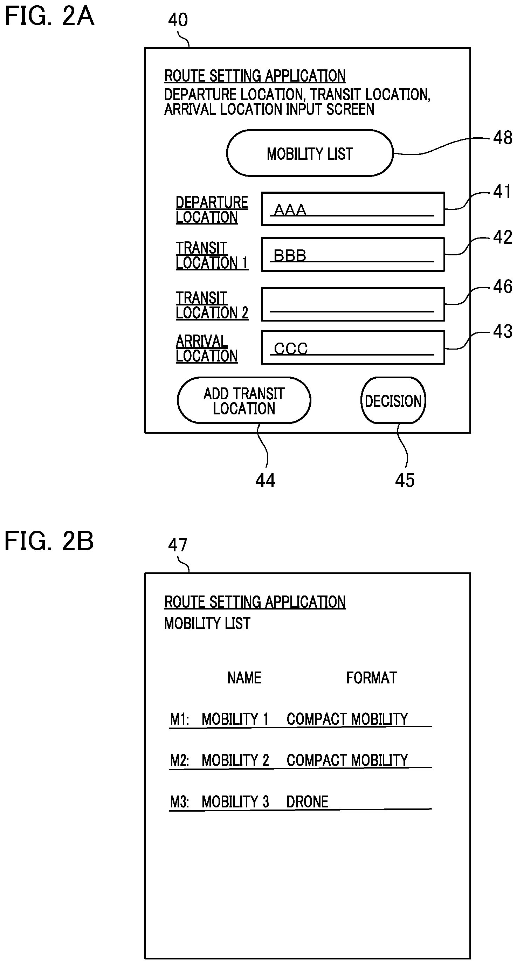

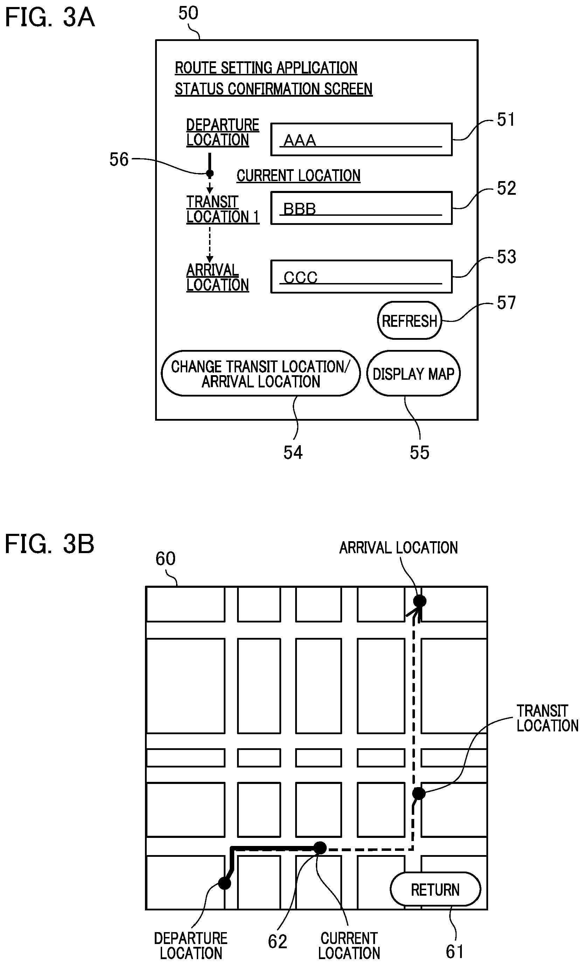

Next, a service application software provided by the autonomous moving body control system will be explained. First, to provide an explanation, a screen image displayed on a user interface 11 when a user enters position information will be explained by using FIG. 2A and FIG. 2B. Next, a screen image displayed on the user interface 11 when the user is viewing the current position of the autonomous moving body 12 will be explained by using FIG. 3A and FIG. 3B. By these explanations, the present invention explains, by using examples, how the operation of the application is performed in the autonomous moving body control system.

It should be noted that in the present explanation, for convenience, a map display is explained in a two-dimensional plane. However, in the present embodiment, the user can specify a three-dimensional position, including "height," and can also input "height" information. That is, according to the present embodiment, a three-dimensional map can be generated.

FIG. 2A is a diagram showing an example of an input screen when a user inputs position information, and FIG. 2B is a diagram showing an example of a selection screen for selecting an autonomous moving body to be used. When the user operates a display screen of the user interface 11 to access the Internet 16 and selects, for example, a route setting application of the autonomous moving body control system, a web page of the system control apparatus 10 is displayed.

First displayed on the web page is an input screen 40 of a departure location, a transit location, and an arrival location for setting a departure location, a transit location, and an arrival location when moving the autonomous moving body 12. The input screen 40 has a list display button 48 for displaying a list of autonomous moving bodies (mobilities) to be used, and when the user presses the list display button 48, a list display screen 47 of mobilities is displayed, as shown in FIG. 2B. The user first selects an autonomous moving body (mobility) to use in the list display screen 47. In the list display screen 47, for example, mobilities of M1 to M3 are selectably displayed, but the number is not limited thereto.

When the user selects any mobility of M1 to M3 by a click operation or the like, the user is automatically returned to the input screen 40 of FIG. 2A. In addition, the mobility name that has been selected is displayed on the list display button 48. Next, the user enters the location set as the departure location in an entry field 41 of "Departure location". In addition, the user inputs the location set as a transit location in an input field 42 of a "Transit location 1". It should be noted that it is possible to add a transit location, and when an add transit location button 44 is pressed once, an input field 46 of a "Transit location 2" is additionally displayed, and it is possible to input the transit location to be added.

Each time the add transit location button 44 is pressed, an input field 46 is additionally displayed, such as "Transit location 3" or "Transit location 4", and it is possible to input a plurality of points of additional transit locations. In addition, the user inputs a location set as the arrival location in the input field 43 of "Arrival location". Although not shown in the figures, when input fields 41 to 43, 46, or the like are clicked, a keyboard or the like for entering characters is temporarily displayed, thereby enabling the desired characters to be input.

Then, it is possible for the user to set the movement route of the autonomous moving body 12 by pressing a decision button 45. In the example of FIG. 2, "AAA" is set as a departure location, "BBB" is set as a transit location 1, and "CCC" is set as an arrival location. The text that is input in the input field may be, for example, an address or the like, or the text may enable the input of position information to indicate a specific position, such as latitude/longitude information, a store name, a phone number, and the like.

FIG. 3A is a diagram showing an example of a screen for confirming the current position of an autonomous moving body, and FIG. 3B is a diagram showing an example of a map display screen for confirming the current position of an autonomous moving body. In FIG. 3A, a reference numeral 50 designates a confirmation screen, and is displayed by an operation of an operation button (not shown) after setting the movement route of the autonomous moving body 12 on a screen as in FIG. 2A. In the confirmation screen 50, the current position of the autonomous moving body 12 is displayed on the web page of the user interface 11, for example, as the current location 56. Accordingly, the user can easily ascertain the current position.

Furthermore, it is possible for the user to display the latest status by updating the screen display information by pressing a refresh button 57. In addition, it is possible for the user to change the departure location, the transit location, and the arrival location by pressing a transit/arrival location change button 54. That is, it is possible to change a location by input of a desired location to be reset in the input field 51 of the "departure location", a desired location to be reset in an input field 52 of the "transit location 1", or a desired location to be reset in an input field 53 of the "arrival location".

FIG. 3B shows an example of a map display screen 60 that switches from the confirmation screen 50 in a case in which a map display button 55 of FIG. 3A is pressed. In the map display screen 60, the current location of the autonomous moving body 12 is more clearly confirmed by the display of a current location 62 on the map. Furthermore, in a case in which the user presses a back button 61, it is possible to return the display screen to the confirmation screen 50 of FIG. 3A.

In this manner, the user can easily set a movement route of the autonomous moving body 12 from a predetermined location to a predetermined location by the operation of the user interface 11. It should be noted that such a route setting application can also be applied, for example, to a cab dispatch service or a drone delivery service and the like.

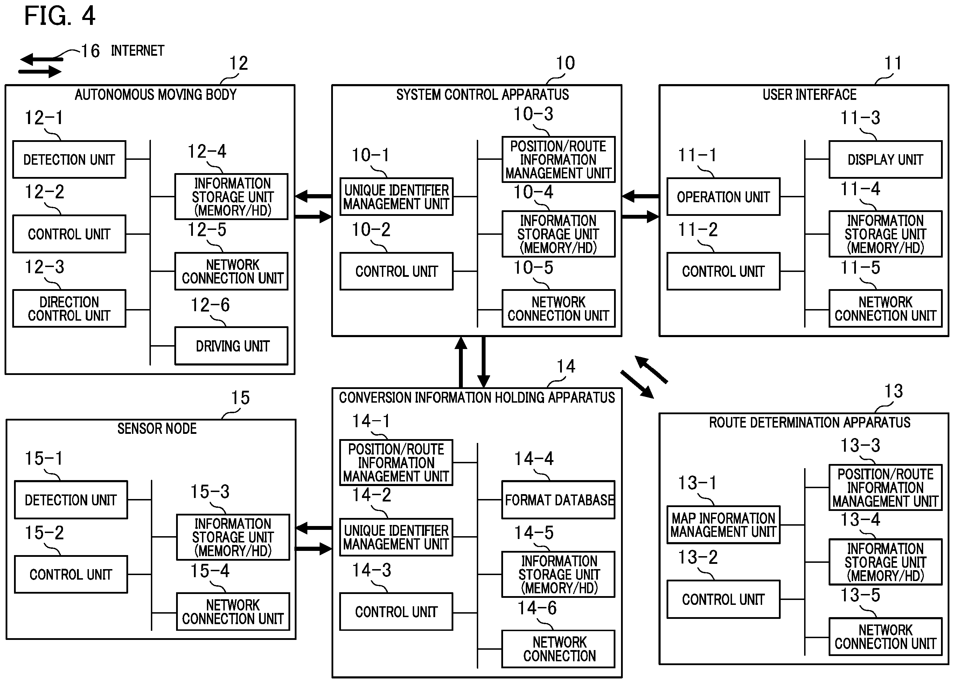

Next, configuration examples and function examples of each of the apparatuses 10 to 15 will be explained in detail by using FIG. 4. FIG. 4 is a block diagram showing an example of an internal configuration of each of the apparatuses of FIG. 1. In FIG. 4, the user interface 11 is provided with an operation unit 11-1, a control unit 11-2, a display unit 11-3, an information storage unit (memory/HD) 11-4, and a network connection unit 11-5. The operation unit 11-1 is configured by a touch panel and key buttons or the like, and is used for data input. The display unit 11-3 is, for example, an LCD screen or the like, and is used to display route information and other data.

The display screen of the user interface 11 shown in FIG. 2 and FIG. 3 is displayed on the display unit 11-3. The user can perform selection of a route, input of information, confirmation of information, or the like, by using the menu displayed on the display unit 11-3. That is, the operation unit 11-1 and the display unit 11-3 provide an operation interface for the user to actually perform an operation. It should be noted that instead of separately providing the operation unit 11-1 and the display unit 11-3, a touch panel may also be used to serve as both an operation unit and a display unit.

The control unit 11-2 incorporates a CPU as a computer, manages various applications in the user interface 11, performs mode management such as information input and information confirmation, and controls communication processing. Furthermore, the control unit 11-2 controls processing in each unit within the system control apparatus.

The information storage unit (memory/HD) 11-4 is a database that holds necessary information, such as a computer program for execution by a CPU and the like. The network connection unit 11-5 controls communication performed via the Internet, a LAN, a wireless LAN, and the like. It should be noted that the user interface 11 may be, for example, a device such as a smartphone, or it may be in a form such as a tablet terminal.

Thus, the user interface 11 of the present embodiment displays an input screen 40 showing the above-described departure location, the transit location, and the arrival location on the browser screen of the system control apparatus 10, and it is possible for the user to input location information such as a departure point, a transit point, and an arrival point. In addition, by displaying the confirmation screen 50 and the map display screen 60 on the browser screen, it is possible to display the current position of the autonomous moving body 12.

In FIG. 4, the route determination apparatus 13 is provided with a map information management unit 13-1, a control unit 13-2, a position/route information management unit 13-3, an information storage unit (memory/HD) 13-4, and a network connection unit 13-5. The map information management unit 13-1 holds map information of a wide area, and in addition to searching for route information that shows a route on a map based on the specified predetermined position information, transmits route information of the search result to the position/route information management unit 13-3.

The map information is three-dimensional map information that includes information such as topography and latitude/longitude/altitude, and also includes regulatory information relating to road traffic laws such as roadways, sidewalks, direction of travel, traffic regulations, and the like. Furthermore, for example, the map information includes time-dependent regulatory information, such as in a case in which one-way traffic is determined by a time period or when a certain road becomes pedestrian-only during specific hours, and incorporates time information thereof. The control unit 13-2 incorporates a CPU as a computer, and controls processing in each unit of the route determination apparatus 13.

In addition to managing the position information of the autonomous moving body acquired via the network connection unit 13-5, the position/route information management unit 13-3 transmits the position information to the map information management unit 13-1, and manages the route information acquired from the map information management unit 13-1 as the search result. The control unit 13-2 converts the route information managed by the position/route information management unit 13-3 into a predetermined data format and transmits the converted route information to an external system in accordance with a request of the external system.

In this manner, in present Embodiment, the route determination apparatus 13 is configured so as to search for a route in accordance with road traffic laws and the like based on the specified position information, and to be able to output route information in a predetermined data format.

In FIG. 4, the conversion information holding apparatus 14 is provided with a position/route information management unit 14-1, a unique identifier management unit 14-2, a control unit 14-3, a format database 14-4, an information storage unit (memory/HD) 14-5, and a network connection 14-6. The position/route information management unit 14-1 manages the predetermined position information acquired through the network connection unit 14-6, and transmits the position information to the control unit 14-3 in accordance with a request of the control unit 14-3. The control unit 14-3 incorporates a CPU as a computer, and controls processing in the various units in the conversion information storage apparatus 14.

The control unit 14-3 converts the position information into a unique identifier that has been specified by the format, based on the position information acquired from the position/route information management unit 14-1 and the information of the format that is managed in the format database 14-4. Then, the control unit 14-3 sends the converted position information to the unique identifier management unit 14-2. The format will be explained in detail below. However, the format assigns an identifier (hereinafter, a "unique identifier") to a space based on a predetermined position, with the starting point as the origin, and manages the space by the unique identifier. In the present embodiment, it is possible to acquire a corresponding unique identifier and information in the space based on the predetermined position information.

The unique identifier management unit 14-2 manages the unique identifier converted by the control unit 14-3 and transmits the converted unique identifier through the network connection unit 14-6. The format database 14-4 manages the information of the format, and transmits the information of the format to the control unit 14-3 according to a request of the control unit 14-3.

In addition, the information in the space acquired via the network connection 14-6 is managed by using the format. The conversion information holding apparatus 14 manages information related to the space acquired by an external device, apparatus, or network, in association with a unique identifier. In addition, the unique identifier and information related to the space associated therewith are provided to an external device, an apparatus, or a network.

In this manner, the conversion information holding apparatus 14 acquires the unique identifier and information in the space based on the predetermined position information, and manages and provides the information in a state in which the acquired information can be shared by the external device, apparatus, or network connected thereto. In addition, the conversion information holding apparatus 14 converts the position information that has been specified in the system control apparatus 10 into a unique identifier, and provides the converted information to the system control apparatus 10.

In FIG. 4, the system control apparatus 10 is provided with a unique identifier management unit 10-1, a control unit 10-2, a position/route information management unit 10-3, an information storage unit (memory/HD) 10-4, and a network connection unit 10-5. The position/route information management unit 10-3 holds simple map information that associates topographical information and latitude/longitude information, and manages predetermined position information and route information acquired through the network connection unit 10-5.

In addition, the position/route information management unit 10-3 is also capable of dividing the route information at a predetermined interval, and of generating position information such as the latitude/longitude of the divided locations. The unique identifier management unit 10-1 manages information converted from the position information and the route information to the unique identifier. The control unit 10-2 incorporates a CPU as a computer, controls the position, the route information, and a communication function of the unique identifier of the system control apparatus 10, and controls processing in each unit of the system control apparatus 10.

In addition, the control unit 10-2 provides a web page to the user interface 11, and transmits predetermined position information acquired from the web page to the route determination apparatus 13. Furthermore, the control unit 10-2 acquires predetermined route information from the route determination apparatus 13 and transmits each of the position information of the route information to the conversion information holding apparatus 14. Then, the control unit 10-2 transmits the route information that has been converted to the unique identifier acquired from the conversion information holding apparatus 14 to the autonomous moving body 12.

In this manner, the system control apparatus 10 is configured so as to be able to perform acquisition of predetermined position information specified by the user, transmission and reception of position and route information, generation of position information, and transmission and reception of route information that uses a unique identifier.

In addition, the system control apparatus 10 collects the route information necessary to perform autonomous movement of the autonomous moving body 12 based on the position information that has been input to the user interface 11, and provides route information to the autonomous moving body 12 by using a unique identifier. It should be noted that in the present embodiment, the system control apparatus 10, the route determination apparatus 13, and the conversion information holding apparatus 14 each function, for example, as a server.

In FIG. 4, the autonomous moving body 12 is provided with a detection unit 12-1, a control unit 12-2, a direction control unit 12-3, an information storage unit (memory/HD) 12-4, a network connection unit 12-5, and a driving unit 12-6. The detection unit 12-1 includes, for example, a plurality of image capturing elements, and includes a function to perform distance measurement based on the phase difference of a plurality of image capturing signals acquired from a plurality of image capturing elements. In addition, the autonomous moving body 12 includes a self-position estimation function that acquires detection information such as surrounding terrain, walls of buildings, and the like (hereinafter referred to as "detection information") and estimates the self-position based on the detection information and map information.

In addition, the detection unit 12-1 includes a self-position detection function such as Global Positioning System (GPS), and, for example, a direction detection function such as a geomagnetic sensor. Furthermore, it is possible for the control unit 12-2 to generate a three-dimensional map of the cyberspace based on the acquired detection information, self-position estimation information, and direction detection information.

Here, a three-dimensional map of a cyberspace is a map in which spatial information equivalent to real-world feature position information can be expressed as digital data. Within this three-dimensional map of the cyberspace, the autonomous moving body 12 that exists in the real world and feature information on the surrounding thereof are held as spatially equivalent information as digital data. Accordingly, by using the digital data, efficient movement is possible.

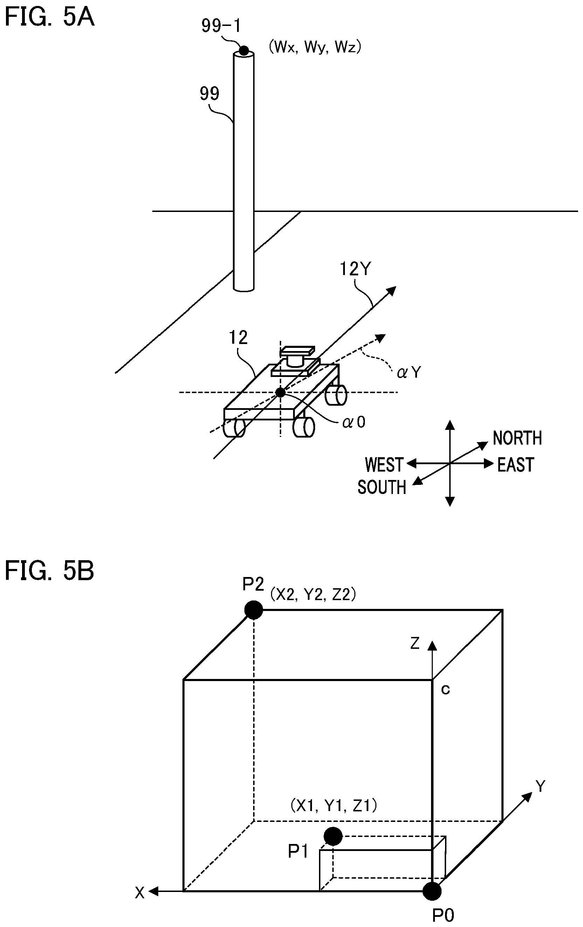

Using FIG. 5 as an example, a three-dimensional map of the cyberspace used in the present Embodiment will be explained below. FIG. 5A is a diagram showing the spatial position relationship in the real world between the autonomous moving body 12 and the column 99 that exists as feature information in the vicinity thereof. FIG. 5B is a diagram showing a state in which the autonomous moving body 12 and the column 99 are mapped to an arbitrary XYZ-coordinate system space with P0 as an origin.

In FIG. 5A and FIG. 5B, the position of the autonomous moving body 12 is identified as position $\alpha 0$ within the autonomous moving body 12 from the position information of latitude and longitude acquired by a GPS or the like (not shown) that has been mounted on the autonomous moving body 12. In addition, the direction and movement speed of the autonomous moving body 12 are identified by the difference between an azimuth $\alpha Y$ acquired by an electronic compass or the like (not shown) and a movement direction 12Y of the autonomous moving body 12.

In addition, the position of a column 99 is specified as the position of a vertex 99-1 based on position information that has been measured in advance. Furthermore, the distance from $\alpha 0$ of the autonomous moving body 12 to the vertex 99-1 may be acquired by the distance measurement function of the autonomous moving body 12. In FIG. 5A, the position of the column 99 is shown as the coordinates (Wx, Wy, Wz) of the vertex 99-1 in a case in which the movement direction 12Y is the axis of the XYZ coordinate system, and $\alpha 0$ is the origin.

In a three-dimensional map of the cyberspace, information acquired in this manner is managed as digital data, and can be reconfigured a spatial information such as in FIG. 5B by the system control apparatus 10, the route determination apparatus 13, and the like. In FIG. 5B, a state in which the autonomous mobile body 12 and the column 99 are mapped onto an arbitrary XYZ coordinate system space with P0 as the origin is shown. By setting P0 to a predetermined latitude and longitude in the real world, and taking the real world azimuth north in the y-axis direction, the autonomous moving body 12 can be represented in this arbitrary XYZ coordinate system space as P1, and the column 99 represented as P2.

Specifically, the position P1 of $\alpha 0$ in this space can be calculated from the latitude and longitude of $\alpha 0$ and the latitude and longitude of P0. Similarly, the column 99 can be calculated as P2. In this example, the two entities of the autonomous moving body 12 and the column 99 are represented in a three-dimensional map of the cyberspace. However, it is of course possible to handle many more entities in a similar manner. In this manner, a three-dimensional map is the self-position and objects of the real world mapped onto a three-dimensional space.

Returning to FIG. 4, the autonomous moving body 12 stores learning result data of object detection performed by machine learning in, for example, an information storage unit (memory/HD) 12-4, and can perform object detection from a captured image by using machine learning. It should be noted that with respect to the detection information, it is possible to acquire the detection information from an external system via the network connection 12-5 and reflect the detection information in a three-dimensional map. Furthermore, the control unit 12-2 incorporates a CPU as a computer and controls the movement, direction change, and autonomous driving function of the autonomous moving body 12, and controls processing in each unit in the autonomous moving body 12.

A direction control unit 12-3 performs a change in the movement direction of the autonomous moving body 12 by changing the driving direction of the moving body by a driving unit 12-6. A driving unit 12-6 consists of a driving apparatus, such as a motor, that generates a propulsive force of the autonomous moving body 12. It is possible for the autonomous moving body 12 to reflect the self-position information, detection information, and object detection information in the three-dimensional map, to generate a route that maintains a certain distance from surrounding terrain, buildings, obstacles, and objects, and perform autonomous driving.

It should be noted that the route determination apparatus 13 performs route generation mainly in consideration of regulatory information related to road traffic laws. In contrast, the autonomous moving body 12 more accurately detects the position of a surrounding obstacle in the route by the route determination apparatus 13 and performs route generation so as to move without coming into contact with the obstacle based on the size of the autonomous moving body 12. In addition, it is also possible to store the mobility format of the autonomous moving body itself in the information storage unit (memory/HD) 12-4 of the autonomous moving body 12. This mobility format is, for example, a legally recognized type of moving body, and refers to, for example, the type of car, bicycle, drone, and the like. Based on this mobility format, it is possible to perform the generation of the format route information described below.

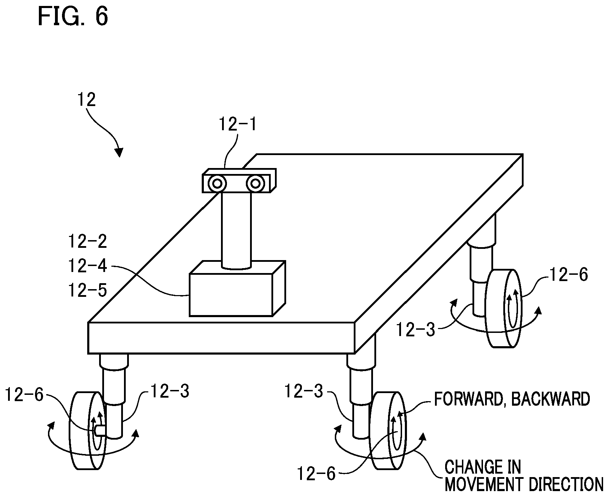

Here, the main body configuration of the autonomous moving body 12 in the present embodiment will be explained by using FIG. 6. FIG. 6 is a perspective view showing a mechanical configuration example of the autonomous moving body 12 according to the First Embodiment. It should be noted that in the present embodiment, the autonomous moving body 12 is explained as an example of a traveling body having wheels, but it is not limited thereto, and may be a flying body such as a drone.

In FIG. 6, the detection unit 12-1, the control unit 12-2, direction control units 12-3, the information storage unit (memory/HD) 12-4, the network connection unit 12-5, and driving units 12-6 are mounted on the autonomous vehicle 12, and each unit is electrically connected to each other. At least two or more of a driving unit 12-6 and a direction control unit 12-3 are arranged in the autonomous moving body 12.

A direction control unit 12-3 changes the direction of a driving unit 12-6 by rotational driving of a shaft, and a driving unit 12-6 performs the forward or backward movement of the autonomous moving body 12 by rotation of the shaft. It should be noted that the configuration explained by using FIG. 6 is an example and is not limited thereto, and for example, a change in the movement direction may be performed by using an omni-wheel or the like.

It should be noted that the autonomous moving body 12 is, for example, a moving body that uses Simultaneous Localization and Mapping (SLAM) technology. Furthermore, the autonomous moving body 12 is configured such that it can autonomously move along a specified predetermined route based on the detection information detected by the detection unit 12-1, or by detection information of an external system acquired via the Internet 16.

The autonomous moving body 12 is capable of trace movement, such as tracing precisely specified points, while simultaneously generating route information locally and moving within the space between the roughly set points.

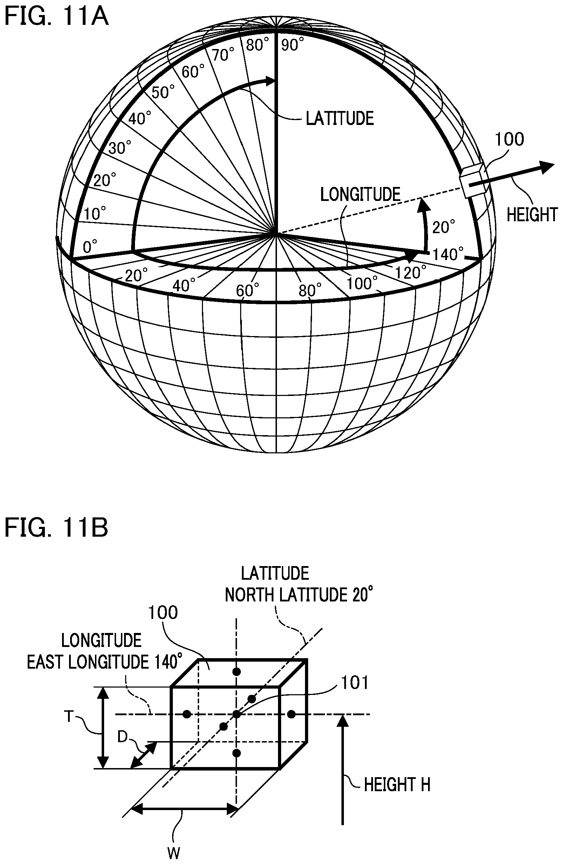

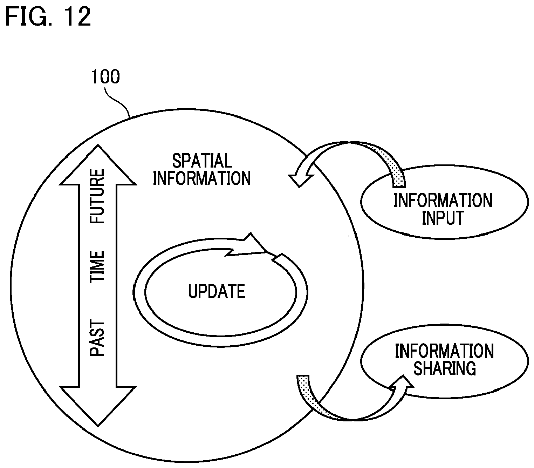

In addition, as described above, the autonomous moving body 12 transmits information related to the movement of an own vehicle, such as direction and moving speed of the own vehicle, position information, and the like, to the system control apparatus 10 through the network connection 12-5. Furthermore, the system control apparatus 10 transmits information related to the operation of the autonomous moving body 12 received from the autonomous moving body 12 to the conversion information holding apparatus 14 through the network connection unit 10-5. The conversion information holding apparatus 14 stores in the format database 14-4 information related to the operation of the autonomous moving body 12, such as the direction, moving speed, and position information of the autonomous moving body 12 received from the system control apparatus 10. In the present embodiment, with respect to any other moving body other than the autonomous moving body 12, similar to the autonomous moving body 12, information related to the operation of the moving body itself, such as its direction, movement speed, position information, and the like is transmitted to the conversion information holding apparatus 14. Therefore, the format database 14-4 becomes a state in which the direction, the movement speed, and the position information of a moving body that exists in a space managed by a unique identifier are stored. How this information is stored will be described below with reference to FIG. 11A, FIG. 11B, and FIG. 12. In a Second Embodiment described below, a control system relating to blind spot accident reduction will be explained, assuming a state in which this information is stored.

In this manner, it is possible for the autonomous moving body 12 of the present embodiment to perform autonomous movement based on the route information using the unique identifier that has been provided by the system control apparatus 10.

Returning to FIG. 4, the sensor node 15 is an external system, such as a video monitoring system, for example, a roadside camera unit, and is provided with a detection unit 15-1, a control unit 15-2, an information storage unit (memory/HD) 15-3, and a network connection unit 15-4. The detection unit 15-1 acquires detection information of an area that it can detect, such as with a camera, for example, and includes an object detection function, a distance measurement function, an object recognition function, image capture direction information, self-position information, and the time when an object was recognized.

The control unit 15-2 incorporates a CPU as a computer and controls the detection, data storage, and data transmission functions of the sensor node 15, and controls processing in each control unit in the sensor node 15. In addition, the detection information acquired by the detection unit 15-1 is stored in the information storage unit (memory/HD) 15-3 and transmitted to the conversion information holding apparatus 14 through the network connection unit 15-4.

In this manner, the sensor node 15 is configured so as to be able to store and communicate detection information, such as image information detected by the detection unit 15-1, feature point information of a detected object, position information, and the like, in the information storage unit 15-3. In addition, the sensor node 15 provides the detection information of an area detectable by the sensor node 15 to the conversion information holding apparatus 14.

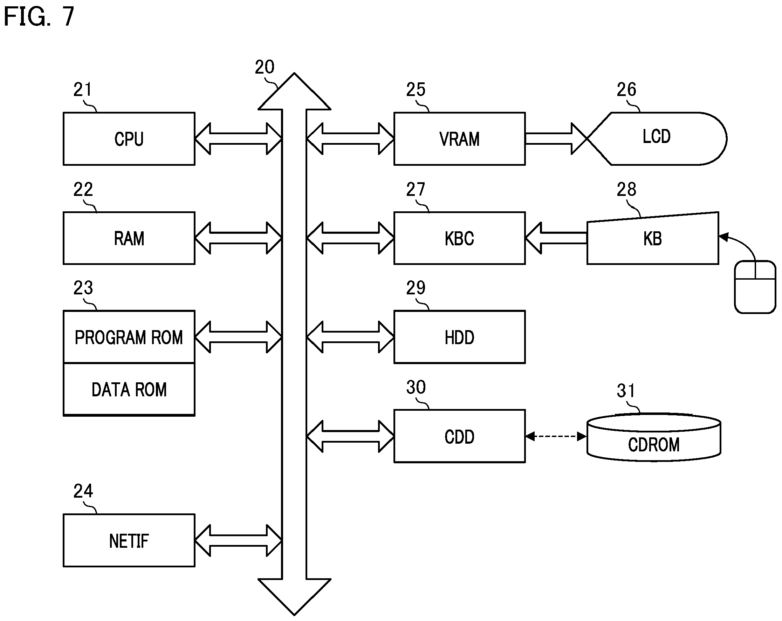

Next, the specific hardware configuration of each control unit in FIG. 4 will be explained. FIG. 7 is a block diagram showing a specific hardware configuration of the control unit 10-2, the control unit 11-2, the control unit 12-2, the control unit 13-2, the control unit 14-3, and the control unit 15-2.

In FIG. 7, a reference numeral 21 designates a CPU that serves as computer that performs calculation and control of the information processing apparatus. A reference numeral 22 designates a RAM, which functions as a main memory of the CPU 21, an area of an execution program, an execution area of the program, and a data area. A reference numeral 23 designates a ROM in which an operation processing procedure of the CPU 21 is stored.

The ROM 23 is provided with a program ROM in which base software (OS), which is a system program that performs system control of the information processing apparatus, is recorded, and a data ROM in which information and the like required for operating the system are recorded. Instead of the ROM 23, it is also possible to use a below-described HDD 29. A reference numeral 24 designates a network interface (NETIF), which performs control for data transfer between information processing apparatuses via the Internet 16 and diagnoses a connection status. A reference numeral 25 designates a video RAM (VRAM), and develops an image to be displayed on the screen of an LCD 26 and performs control of the display thereof. A reference numeral 26 designates a display apparatus such as a display (hereinafter referred to as an "LCD").

A reference numeral 27 designates a controller (hereinafter referred to as a "KBC") for controlling an input signal from an external input apparatus 28. A reference numeral 28 designates an external input device (hereinafter referred to as a "KB") for receiving an operation performed by a user, and for example, a pointing device such as a keyboard or a mouse is used. A reference numeral 29 designates a hard disk drive (hereinafter referred to as an "HDD"), which is used to store application programs and various data. An application program in the present embodiment is a software program or the like that executes various processing functions in the present embodiment.

A reference numeral 30 designates a CDD as a removable data storage medium for input/output of data to/from a removable medium 31, such as a CD-ROM drive, a DVD drive, a Blu-Ray (registered trademark) disc drive, and the like. The CDD 30 is an example of an external input/output apparatus. The CDD 30 is used in a case in which the application program described above is read from a removable medium or the like. A reference numeral 31 designates a removable medium, such as a CD-ROM disc, a DVD, a Blu-Ray disc, or the like, that is read by the CDD 30.

It should be noted that a removable medium may be a magneto-optical recording medium (for example, an MO), a semiconductor recording medium (for example, a memory card), or the like. Application programs and data stored in the HDD 29 can also be utilized after being stored in the removable media 31. A reference numeral 20 designates a transmission bus (address bus, data bus, input/output bus, and control bus) for connecting each of the above-described units with each other.

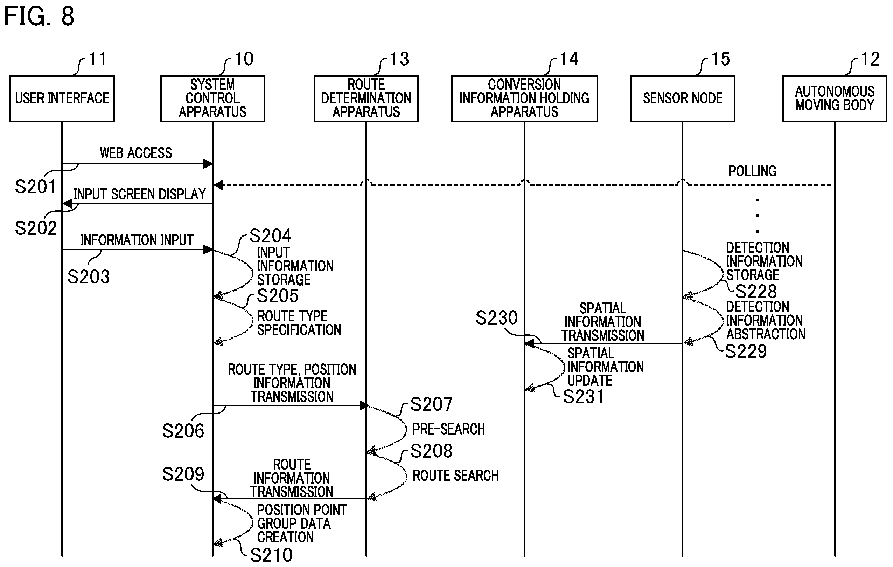

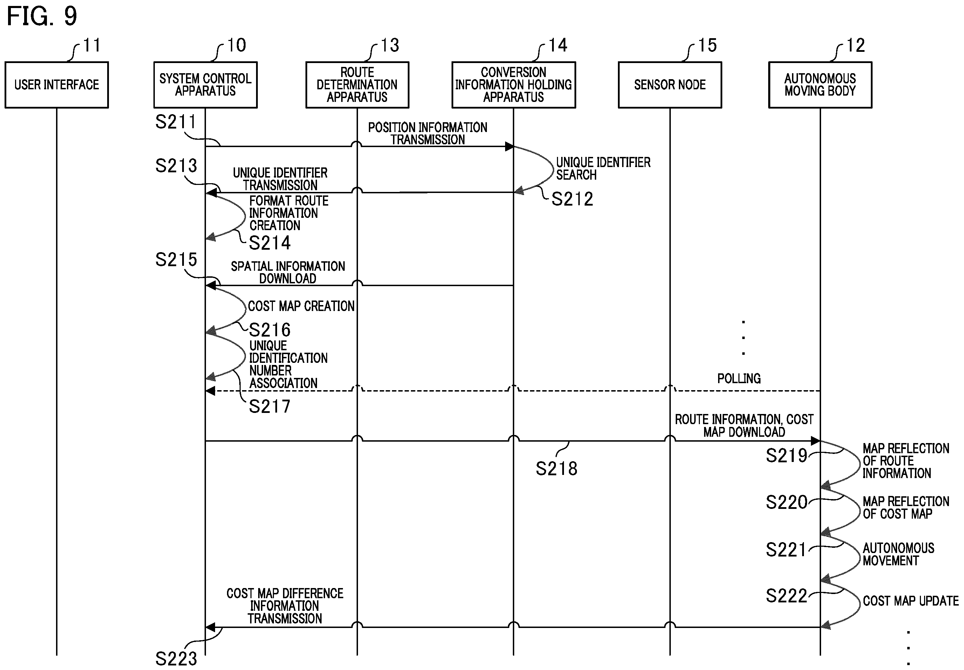

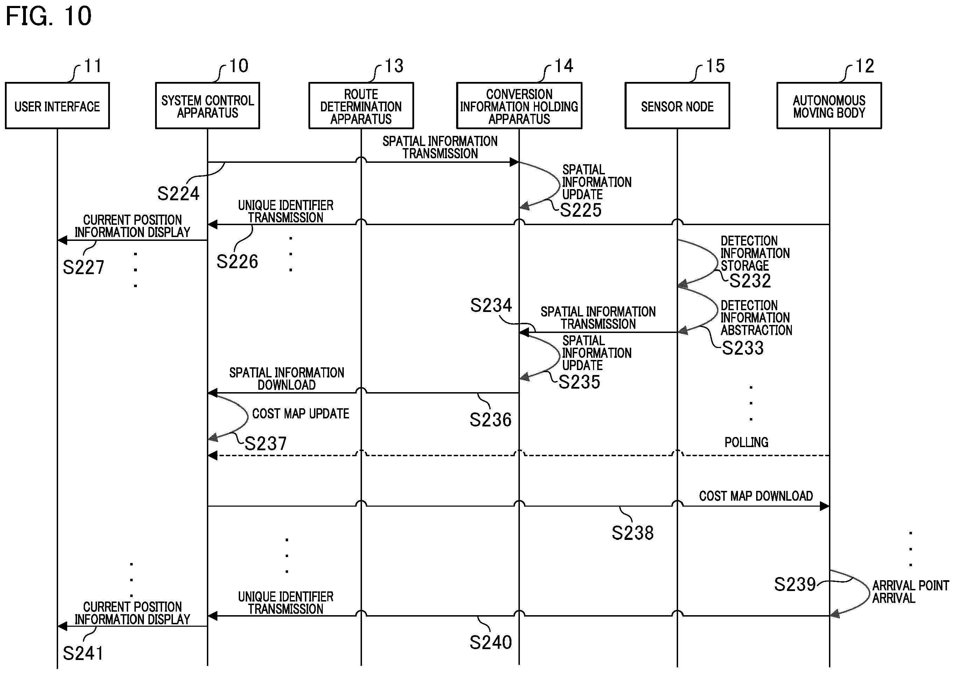

Next, details of the control operation in the autonomous moving body control system for realizing a route-setting application and the like as was explained in FIG. 2 and FIG. 3 will be explained by using FIG. 8 to FIG. 10. FIG. 8 is a sequence diagram explaining the processing executed by an autonomous moving body control system according to the present embodiment. FIG. 9 is a sequence diagram that is a continuation of FIG. 8, and FIG. 10 is a sequence diagram that is a continuation of FIG. 9.

FIG. 8 to FIG. 10 show the processing that is executed by each apparatus from the time at which the user inputs the position information into the user interface 11 until the current position information of the autonomous moving body 12 is received. It should be noted that the operation of each step of the sequence of FIG. 8 to FIG. 10 is performed by a computer in the control unit of each apparatus executing a computer program that has been stored in a memory.

First, in step S201, the user accesses a web page provided by the system control apparatus 10 by the user interface 11. In step S202, the system control apparatus 10 displays a position input screen as explained in FIG. 2 on a display screen of the web page. In step S203, as explained in FIG. 2, the user selects an autonomous moving body (mobility) and inputs position information indicating a departure point/a transit point/an arrival point (hereinafter, "position information").

The position information may be a word that specifies a specific location (hereinafter, "position word") that is, for example, a building name, a station name, an address, and the like, and a specific position on the map that has been displayed on the web page can be specified as a point (hereinafter referred to as "point").

In step S204, the system control apparatus 10 stores the type information of the selected autonomous moving body 12 and the position information that has been input. At this time, in a case in which the position information is a position word, the position word is saved, and in a case in which the position information is the point, the latitude/longitude corresponding to the point is searched based on the simple map information stored in the position/route information management unit 10-3, and the latitude/longitude is stored.

Next, in step S205, the system control apparatus 10 specifies the type of route of the moving body that can be moved (hereinafter, the "route type") from the mobility format (type) of the autonomous moving body 12 that has been specified by the user. Then, in step S206, the route type is transmitted to the route determination apparatus 13 together with the position information.

The mobility type is a legally recognized type of moving body, and means, for example, a type such as car, bicycle, drone, and the like. In addition, the type of route is, for example, a public road, a highway, a freeway, or the like for an automobile, or a designated sidewalk, a roadside strip on a public road, a dedicated bicycle lane, or the like for a bicycle.

In step S207, the route determination apparatus 13 inputs the received position information as a departure/transit/arrival point in its owned map information. In a case in which the position information is the position word, map information is searched by position word, and the corresponding latitude/longitude information is used. In a case in which the position information is latitude/longitude information, the position information is used by the direct input thereof into the map information.

Subsequently, in step S208, the route determination apparatus 13 searches for a route from the departure point to the arrival point via a transit point. At this time, the searched route is searched in compliance with the route type. Then, in step S209, as a result of the search, the route determination apparatus 13 outputs the route from the departure point to the arrival point via the transit point (hereinafter, "route information") in a GPX format (GPS eXchange Format), and transmits the route information to the system control apparatus 10.

A GPX format file is configured mainly by the three types of information of a waypoint (point information having no order relationship), a route (point information having an order relationship with time information added), and a track (an aggregate of a plurality of point information: a trajectory).

As attribute values for each of point information, latitude/longitude, and as subelements, elevation, geoid height, GPS reception status/accuracy, or the like are described. The minimum element required in a GPX file is the latitude/longitude information of a single point, and the description of any other information is optional. The route is output as the route information, which is an aggregate of point information consisting of latitude/longitude having an order relationship. It should be noted that the route information may be in any other format if the above is satisfied.

Here, an example of a configuration of a format managed by the format database 14-4 of the conversion information holding apparatus 14 is explained in detail with reference to FIG. 11A, FIG. 11B, and FIG. 12. FIG. 11A is a diagram showing the latitude/longitude information of the Earth, and FIG. 11B is a perspective view showing a predetermined space 100 of FIG. 11A. FIG. 12 is a schematic diagram showing spatial information in the space 100.

In FIG. 11A and FIG. 11B, the format divides the space of the Earth into three-dimensional spaces determined by ranges based on latitude, longitude, and height as the starting point, and each space is made manageable by adding a unique identifier. For example, here, the space 100 is displayed as a predetermined three-dimensional space. The space 100 is defined with a center 101 at latitude 20 degrees north, longitude 140 degrees east, and height H, and is a divided space with a defined width of D in the latitude direction, a defined width of W in the longitude direction, and a defined width of T in the height direction. In addition, the space 100 is one of a space that divides the space of the Earth into ranges determined by the latitude/longitude/height as the starting point.

In FIG. 11A, only space 100 is shown for convenience, but as described above, in the specification of the format, it is assumed that spaces that have been specified in the same way as space 100 are disposed adjacent to each other in the latitude/longitude/height directions. Furthermore, in addition to being defined horizontally by latitude/longitude, each of the disposed divided spaces is assumed to also have an overlap in the height direction, and the position in the height direction is defined by height.

It should be noted that in FIG. 11B, the center 101 of the divided space is set as the starting point of the latitude/longitude/height, but is not limited thereto, and may be made, for example, a corner portion of the space or the center of the bottom surface. Furthermore, the shape can be a substantially cuboid body, and when a case in which the shape is laid on a spherical surface like that of the Earth is considered, setting the top of the substantially cuboid body to be slightly wider than the bottom of the substantially cuboid body enables a more compact arrangement without gaps.

In FIG. 12, taking the space 100 as an example, in the format database 14-4, information related to the type and time of an object that exists in or can enter the range of the space 100 (spatial information) is stored by associating and formatting the information with each unique identifier. Furthermore, the formatted spatial information is stored in a time series, such as from the past to the future.

That is, the conversion information holding apparatus 14 formats spatial information related to the type of object that exists or can enter the three-dimensional space defined by latitude/longitude/height in association with a unique identifier and stores the formatted spatial information in the format database 14-4. The spatial information is updated based on information that has been input by an external system (for example, the sensor node 15) and the like that is communicatively connected to the conversion information holding apparatus 14, and the information is shared with other external systems that have been communicatively connected to the conversion information holding apparatus 14.

With respect to the autonomous moving body 12, as described above, the autonomous moving body 12 transmits information related to movement of the own vehicle, such as a direction, a movement speed, and position information of the own vehicle, and how this information is stored will be explained below.

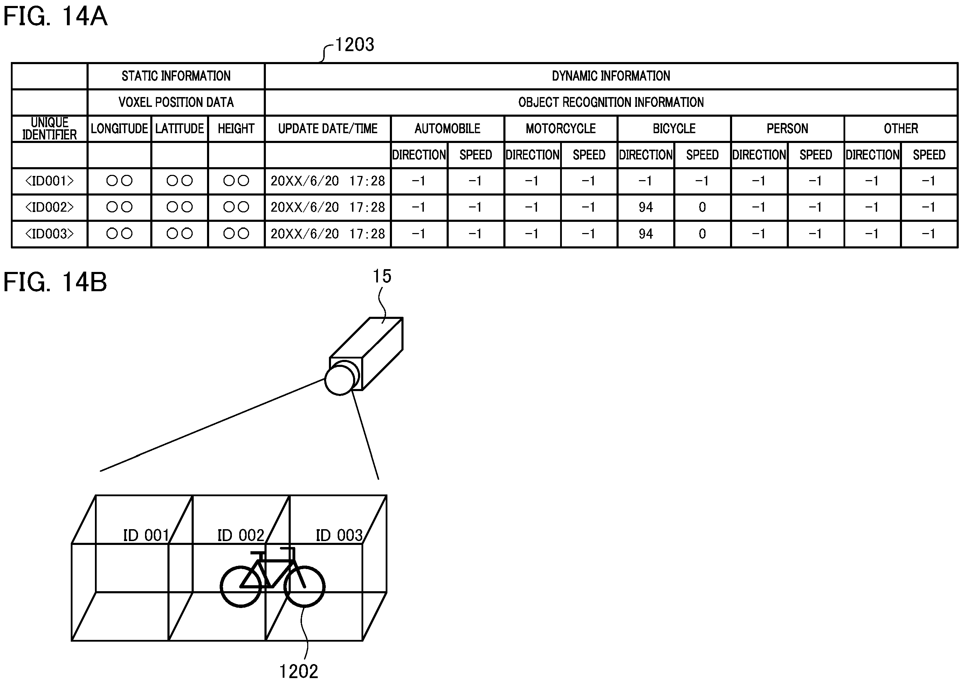

FIG. 14A and FIG. 14B are a diagram explaining how data is stored in the format database 14-4. FIG. 14A is a diagram showing a table that shows an example of information that is stored in association with a unique identifier. FIG. 14B is a schematic perspective diagram schematically representing an example in which the sensor node 15 captures an image of a space.

The sensor node 15 is disposed so as to be able to capture an image of the space to which a unique identifier 001 (hereinafter also referred to as "ID001"), a unique identifier 002 (hereinafter also referred to as "ID002"), and a unique identifier 003 (hereinafter also referred to as "ID003") are assigned.

The sensor node 15 recognizes a bicycle 1202 as a bicycle. The sensor node 15 recognizes, by the distance measurement function, the extent to which the bicycle 1202 exists at a position separated from the sensor node 15, that is, the distance from the sensor node 15 to the bicycle 1202. Furthermore, because the sensor node 15 also includes self-position information and image capture direction information, it is possible to determine that the bicycle 1202 exists in the space to which ID002 and ID003 are assigned by performing a calculation in accordance with the distance.

Because the sensor node 15 performs object recognition processing for each captured frame, it is possible to calculate the direction and movement speed of a moving body in the captured image from the difference in position from the previous frame. A table 1203 is a table summarizing the information that was recognized by the sensor node 15. In the present control system, as shown in the table 1203, the items of a car, a motorcycle, a bicycle, and a person are prepared for each unique identifier as recognition objects. In a case in which an object does not exist in the space to which the unique identifier is assigned, "-1" is input. In a case in which an object exists in the space to which the unique identifier is assigned, the direction in which it is facing and its velocity are input. In the table 1203, a direction is expressed as an angle, with north being 0 degrees and one counterclockwise rotation being 360 degrees. In the table 1203, velocity is expressed in meters per second [m/s]. The sensor node 15 performs object recognition in each captured frame, compiles data as shown in the table 1203, and transmits the data to the conversion information holding apparatus 14 through the network connection 15-4.

It should be noted that the sensor node 15 may only perform object recognition to determine what object is at which position, and transmit the object recognition result to the conversion information holding apparatus 14 through the network connection 15-4. In this case, the conversion information holding apparatus 14 may store the received object recognition result in the unique identifier management unit 14-2 in the form of the table 1203 in accordance with the format database 14-4.

In this manner, in the present embodiment, information related to the type and time of an object that exists in or can enter a three-dimensional space defined by latitude/longitude/height (hereinafter, "spatial information") is formatted in association with a unique identifier and stored in a database. Then, management of time-space is made possible by the formatted spatial information.

Returning to FIG. 8, a continuation of the processing that is executed by the autonomous moving body control system will again be explained. In step S210, the system control apparatus 10 confirms an interval between each point information in the received route information. Then, the alignment between intervals of point information and intervals between starting point positions of the divided spaces defined by the format is created as position point group data.

At this time, the system control apparatus 10 makes the result obtained by thinning out the position information within the route information according to the interval between the starting point positions of the divided spaces as position point group data in a case in which an interval of the position information is smaller than the interval between the starting point positions of the divided spaces. In addition, the position information is made position point group data by the system control apparatus 10 interpolating the position information within a range that does not deviate from the route information in a case in which the interval of the position information is greater than the interval between the starting points of the divided spaces.

Next, as shown in step S211 of FIG. 9, the system control apparatus 10 transmits the latitude/longitude information of each point information of the position point group data to the conversion information holding apparatus 14 in order of route. Furthermore, in step S212, the conversion information holding apparatus 14 searches for a unique identifier corresponding to the received latitude/longitude information from the format database 14-4 and in step S213, transmits the unique identifier to the system control apparatus 10.

In step S214, the system control apparatus 10 arranges the received unique identifiers in the same order as the original position point group data, and stores the received unique identifiers as route information (hereinafter, "format route information") by using the unique identifiers. Thus, in step S214, the system control apparatus 10 acquires spatial information from the database of the conversion information holding apparatus 14, and generates route information related to the movement route of the moving body based on the acquired spatial information and the type information of the moving body.

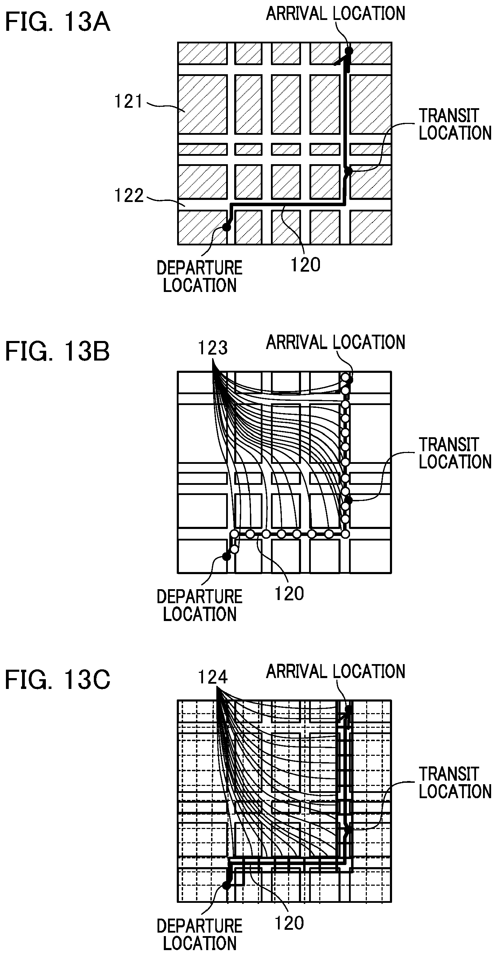

Here, a process of generating the position point group data from the route information, and converting the position point group data into route information by using a unique identifier will be explained in detail with reference to FIG. 13A, FIG. 13B, and FIG. 13C. FIG. 13A is an image diagram in which route information is displayed by map information, FIG. 13B is an image diagram in which route information using position point group data is displayed by map information, and FIG. 13C is an image diagram in which route information using unique identifiers is displayed by map information.

In FIG. 13A, a reference numeral 120 designates route information, a reference numeral 121 designates a non-traversable area through which the autonomous moving body 12 cannot pass, and a reference numeral 122 designates a traversable area in which the autonomous moving body 12 can move. The route information 120 generated by the route determination apparatus 13 based on the position information of the departure point, transit point, and arrival point specified by the user is generated as a route that passes through the departure point, transit point, and arrival point, and passes through the movable area 122 on the map information.

In FIG. 13B, a reference numeral 123 designates a plurality of position information on the route information. The system control apparatus 10 that has acquired the route information 120 generates position information 123, which is disposed at predetermined intervals on the route information 120. The position information 123 can be expressed as each of a latitude/longitude/height, and in the present embodiment, these position information 123 are referred to as position point group data. Then, the system control apparatus 10 transmits the latitude/longitude/height of each point of these position information 123 one by one to the conversion information holding apparatus 14, and converts these into unique identifiers.

In FIG. 13C, a reference numeral 124 designates positional/spatial information in which the position information 123 is converted into a unique identifier one by one, and a spatial range defined by a unique identifier is represented by a rectangular frame. Position spatial information 124 can be obtained by converting the positional/spatial information into a unique identifier. Thus, a route that has been represented by the route information 120 is expressed by converting the route into continuous position spatial information 124. It should be noted that in each positional/spatial information 124, information related to the type of an object that exists or can enter the range of the space and time are associated. This continuous positional/spatial information 124 is called "format route information" in the present embodiment.

Returning to FIG. 9, a continuation of the processing that is again executed by the autonomous moving body control system will be explained. Following from step S214, in step S215, the system control apparatus 10 downloads the spatial information associated with each unique identifier of the format route information from the conversion information holding apparatus 14.

Then, in step S216, the system control apparatus 10 converts the spatial information into a format that can be reflected in a three-dimensional map of the cyberspace of the autonomous moving body 12, and creates information that indicates the position of a plurality of objects (obstacles) in the predetermined space (hereinafter, a "cost map"). The cost map may be created initially with respect to the space of all routes of the format route information, or it may be created by a method in which it is created in a form that is divided by fixed areas and updated sequentially.

Next, in step S217, the system control apparatus 10 stores the format route information and the cost map by associating the format route information and the cost map with a unique identification number assigned to the autonomous moving body 12. At a predetermined time interval, the autonomous moving body 12 locally monitors (hereinafter, "polls") its own unique identification number via a network, and in step S218, downloads the associated cost map. In step S219, the autonomous moving body 12 reflects latitude/longitude information of each unique identifier of the format route information as route information on a locally-created three-dimensional map of cyberspace.

Next, in step S220, the autonomous moving body 12 reflects the cost map in a three-dimensional map of the cyberspace as obstacle information on the route. In a case in which the cost map is created in a form in which it is divided at fixed intervals, after moving through the area for which the cost map has been created, the cost map for the next area is downloaded, and the cost map is updated.

In step S221, the autonomous moving body 12 moves in accordance with the route information while avoiding objects (obstacles) that have been input in the cost map. That is, the autonomous moving body 12 performs movement control based on the cost map. At this time, in step S222, the autonomous moving body 12 moves while performing object detection, and if there is a difference with the cost map, moves while updating the cost map by using object detection information.

Furthermore, in step S223, the autonomous moving body 12 transmits the difference information with the cost map to the system control apparatus 10, together with the corresponding unique identifier. In step S224 of FIG. 10, the system control apparatus 10, having acquired the difference information between a unique identifier and the cost map, transmits the spatial information to the conversion information holding apparatus 14, and in step S225, the conversion information holding apparatus 14 updates the spatial information of the corresponding unique identifier. Here, the content of the spatial information that is updated is not directly reflected in the difference information from the cost map, but is abstracted by the system control apparatus 10 and then transmitted to the conversion information holding apparatus 14. Detailed content with respect to the abstraction will be described below.

In step S226, the autonomous moving body 12, which is moving based on the format route information, transmits to the system control apparatus 10 the unique identifier associated with the space currently being traversed at each passage through a divided space linked to each unique identifier. Alternatively, the autonomous moving body 12 may be associated with its own unique identification number at the time of polling. The system control apparatus 10 determines the current position of a autonomous moving body 12 on the format route information, based on the unique identifier information of the space that the system control apparatus 10 receives from the autonomous moving body 12.

By repeating step S226, the system control apparatus 10 can determine the current location of the autonomous moving body 12 within the format route information. It should be noted that, with respect to a unique identifier of the space through which the autonomous moving body 12 has passed, the system control apparatus 10 may cease to hold the unique identifier, thereby reducing the held data capacity of the formatted route.

In step S227, the system control apparatus 10 creates the confirmation screen 50 and the map display screen 60 that were explained in FIG. 2 and FIG. 3 based on the current position information of the autonomous moving body 12 that has been determined, and displays the confirmation screen 50 and the map display screen 60 on a display screen of a web page. Each time the unique identifier indicating the current position is transmitted by the autonomous moving body 12 to the system control apparatus 10, the system control apparatus 10 updates the confirmation screen 50 and the map display screen 60.

In contrast, in step S228, the sensor node 15 stores the detection information of a detection range and in step S229 abstracts the detection information, and in step S230, the sensor node 15 transmits the abstracted detection information as spatial information to the conversion information holding apparatus 14. The abstraction is information such as whether or not an object exists, or whether or not there has been a change in an existence state of an object, for example, and is not detailed information related to the object. Detailed information related to an object is stored in a memory in the sensor node 15.

Then, in step S231, the conversion information holding apparatus 14 stores the spatial information, which is abstracted detection information, in association with a unique identifier of a position corresponding to the spatial information. Thus, the spatial information is stored in one unique identifier in the format database.

Furthermore, in a case in which an external system different from the sensor node 15 utilizes the spatial information, the external system utilizes the spatial information by acquiring the detection information in the sensor node 15 via the conversion information storage apparatus 14, based on the spatial information in the conversion information storage apparatus 14. At this time, the conversion information holding apparatus 14 also includes a function to connect the communication standard of the external system and the sensor node 15.

By performing the above-described storage of spatial information not only in sensor node 15, but between a plurality of devices, the conversion information holding apparatus 14 has a function of connecting data from a plurality of devices with a relatively light data volume. It should be noted that in a case in which the system control apparatus 10 requires detailed object information when creating the cost map in steps S215 and S216, the detailed information can be used by downloading the detailed information from an external system storing the detailed detection information of spatial information.

Here, it is assumed that the sensor node 15 updates the spatial information on the route of the format route information of the autonomous moving body 12. At this time, the sensor node 15 acquires the detection information, generates the abstracted spatial information at step S233, and transmits the abstracted spatial information to the conversion information holding apparatus 14 at step S234. The conversion information holding apparatus 14 stores the spatial information in the format database 14-4 at step S235.

The system control apparatus 10 confirms a change in the spatial information in the managed format route information at a predetermined time interval, and if there is a change, downloads the spatial information at step S236. Then, at step S237, the system control apparatus 10 updates the cost map that has been associated with the unique identification number assigned to the autonomous moving body 12. In step S238, the autonomous moving body 12 recognizes the update of the cost map by polling, and reflects the update in the locally-created three-dimensional map of the cyberspace.

In this manner, by utilizing spatial information that has been shared by a plurality of devices, it is possible for the autonomous moving body 12 to recognize in advance a change on a route that is not recognizable locally, and to respond to that change. In a case in which the above-described series of systems are executed, and the autonomous moving body 12 arrives at the arrival point in step S239, the unique identifier is transmitted at step S240.

Thus, the system control apparatus 10, having recognized the unique identifier, at step S241 displays an arrival display on the user interface 11, and terminates the application. According to the present embodiment, in this manner, it is possible to provide a format of a digital architecture, and an autonomous moving body control system that uses the format.

As explained in FIG. 11A, 11B, and FIG. 12, information (spatial information) related to the type and time of an object that exists in or can enter the range of the space 100 is stored in the format database 14-4 in a time series from the past to the future. In addition, the spatial information is updated based on information that has been input from an external sensor or the like that has been communicably connected to the conversion information holding apparatus 14, and is shared with another external system that is connectable to the conversion information holding apparatus 14.

As one of these spatial information, there is type information of an object in the space. Here, the type information of an object in a space is information that can be acquired from map information, such as a roadway, a sidewalk, a bicycle path, and the like in a road. In addition, information such as the direction of travel of the mobility and traffic regulations and the like in a roadway can be similarly defined as type information. Furthermore, it is possible to define type information in the space itself.

(Second Embodiment)

In the present embodiment, a control system related to blind spot accident reduction using the autonomous moving body control system of the First Embodiment will be explained. Control of this system is realized by the system control apparatus 10 shown in FIG. 4 executing main control. In the following, this system will be referred to as a blind spot accident reduction system.

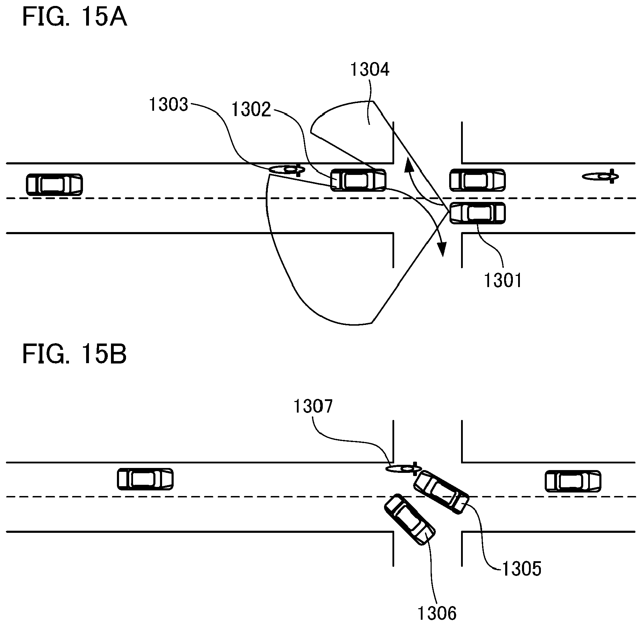

FIG. 15A and FIG. 15B are a diagram explaining a blind spot accident. A blind spot accident refers to an accident in which a collision factor such as an automobile, a motorcycle, a bicycle, or a person unexpectedly enters the path of travel of an own vehicle from a blind spot that cannot be recognized by the driver of the vehicle or by an onboard camera, and causes a collision. Although a blind spot accident can have many different patterns, in the present Embodiment, the pattern of FIG. 15A and FIG. 15B, which is a typical blind spot accident, will be explained as an example. In the present embodiment, although an intersection is explained as an example of a collision hazard area, which is an area in which the autonomous moving body 12 may collide with a collision factor described below, a collision hazard area may be any area other than an intersection.

FIG. 15A shows before an accident occurs, and FIG. 15B shows the point at which the accident occurs. FIG.

15A shows an own vehicle 1301 waiting to make a right turn at an intersection, and at the same time that an oncoming vehicle 1302 makes a right turn, the own vehicle 1301 also starts to make a right turn.

A front vehicle-mounted camera is mounted on the own vehicle 1301, and the field of view thereof is represented by a field of view 1304. At the time of FIG. 15A, a motorcycle 1303 is hidden in a blind spot of the oncoming vehicle 1302 and is not captured by the front vehicle-mounted camera of the own vehicle 1301. Then, in FIG. 15B, the own vehicle 1301 proceeds to become a vehicle 1305, and the oncoming vehicle 1302 proceeds to become an oncoming vehicle 1306. In FIG. 15B, when the vehicle 1305 is attempting to make a right turn, a motorcycle 1307 has suddenly appeared from behind the oncoming vehicle 1306, and is colliding with the vehicle 1305 due to delayed detection.

To reduce the number of accidents like that of FIG. 15A and FIG. 15B, in the blind spot accident reduction system of present embodiment, a collision factor that emerges from a blind spot that cannot be detected by a driver or a vehicle-mounted camera is detected by using information of the autonomous movement control system.

In the detection of a collision factor, if all of the information of around the own vehicle is acquired from the conversion information holding apparatus 14, the information volume becomes so broad and voluminous that time is required to search for the collision factor. Therefore, a range of information that is acquired in the blind spot accident reduction system of the present embodiment is set.

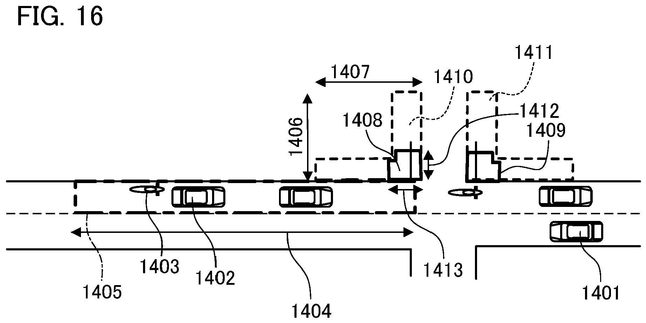

FIG. 16 is a diagram explaining the search range of a collision factor in a blind spot accident reduction system. FIG. 16 is a schematic diagram in which the area around an own vehicle 1401, which is traveling from the right side to the left side in FIG. 16, is viewed from above at the time when the own vehicle 1401 begins to attempt to make a right turn at the next intersection. The own vehicle 1401 is an example of the autonomous moving body 12 shown in FIG. 4.

In the state shown in FIG. 16, when a front vehicle-mounted camera of the own vehicle 1401 captures an intersection ahead, the own vehicle 1401 sets an area 1405, an area 1410, an area 1411, an area 1408 and an area 1409. These areas are areas in which a moving body, such as a motorcycle, a bicycle, a person, or the like, which may enter the path of travel of the own vehicle 1401 when the own vehicle 1401 approaches an intersection to make a right turn in the future, is most likely to currently exist. The area 1405, the area 1410, the area 1411, the area 1408, and the area 1409 are examples of collision factor areas defined according to the intersection, which is a collision hazard area. The front vehicle-mounted camera of the own vehicle 1401 is an example of a camera included in the detection unit 12-1 of the autonomous moving body 12 shown in FIG. 4. An area having the highest possibility that a moving body which may enter the path of travel of the own vehicle 1401 currently exists is set in the map information stored in the information storage unit (memory/HD) 12-4 of the system control apparatus 10 shown in FIG. 4, and stored. The specific setting method of each area in the system control apparatus 10 will be described below.

First, the concept of a setting range of the area 1405 will be explained. The area 1405 is an area primarily for performing the detection of a motorcycle. A motorcycle that may collide with the own vehicle 1401 in the future is currently present further to the left side of the intersection in the opposite lane. Accordingly, the right end of the area 1405 is an intersection. In addition, because motorcycles travel on a road, the vertical width of the area 1405 in FIG. 16 is the width of the road of the opposite lane.

Furthermore, it is possible to set the left end of the area 1405 as below. Because the own vehicle 1401 is still before the intersection (to the right side in FIG. 16), the motorcycle having the possibility of colliding with the own vehicle 1401 in the future is also traveling before the intersection (to the left side in FIG. 16). At the time of FIG. 16, it is assumed that the own vehicle 1401 is in a position at which it takes Tm [seconds] to reach the intersection, based on the distance to the intersection and the speed of the own vehicle 1401. In this case, a motorcycle having the possibility of colliding with the own vehicle 1401 in the future will also be in such a position as to take the time of Tm (seconds) to the intersection. However, because the speed of the motorcycle is unknown at the current time, in the present embodiment, it is assumed that the speed of the motorcycle is in the range of 0 to twice the maximum speed limit of the road on which the motorcycle is traveling. The upper speed limit for the motorcycle is made twice the maximum speed limit for the road so that a motorcycle traveling at a speed not in compliance with the maximum speed limit can also be detected, and this doubling factor serves as a safety margin for ensuring safety. Therefore, in the present embodiment, a motorcycle that may collide with the own vehicle 1401 in the future is estimated at the current time to be somewhere in the range of Formula 1.

(Formula 1)

The range from the position of the intersection to the position (Tm [second] x maximum speed of the traveling road [m/sec] x 2) [m] on the side before the intersection (left side in FIG. 16).

Furthermore, in order to detect a motorcycle that may collide with the own vehicle 1401 in the future from the data of the format database 14-4, it is necessary to take into account the update delay of this format database 14-4. An update delay of this format database 14-4 will be explained below.

In order to input information into this format database 14-4, processing is required whereby the sensor node 15 captures an image of the motorcycle, recognizes the motorcycle by object recognition, generates data, and stores the data in the format database 14-4. Therefore, the information stored in the format database 14-4 will be information stored that is older than the information at the current time.

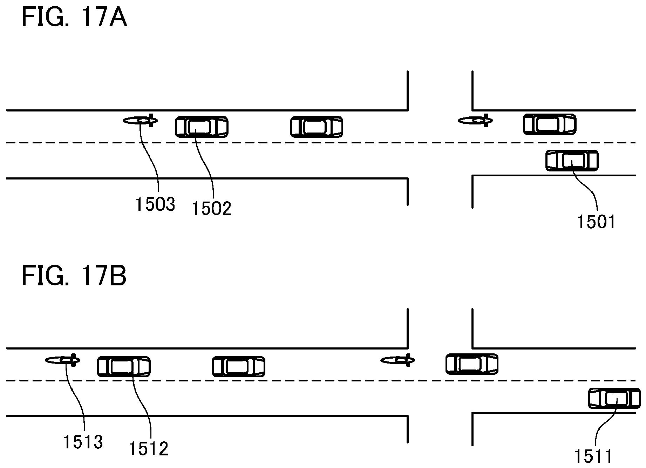

FIG. 17A and FIG. 17B are a diagram in which information that is currently held by the format database 14-4 is mapped. FIG. 17A shows a state of a current real world. The positional relationship between a current own vehicle 1501, an oncoming vehicle 1502, and a motorcycle 1503 is shown in FIG. 17A. At this time, the data stored in the format database 14-4 is information before the time difference Ts [seconds] obtained by subtracting the update time from the current time, as shown in FIG. 17B. In the present embodiment, this time difference Ts [second] is made to be 1 second. Therefore, in the format database 14-4, the own vehicle 1501, an oncoming vehicle 1502, and a motorcycle 1503 are each stored at a position of 1 second ago. Accordingly, the left end of area 1405, which takes into account the data update time of the format database 14-4, is further extended to the left side in FIG. 16 by the distance of Formula 2 beyond the left end position of the area 1405.

(Formula 2)

$$(Ts \text{ [s]} \times \text{maximum speed of the traveling road [m/sec]} \times 2) \text{ [m]}$$

In the present embodiment, the length obtained by extending the range of Formula 1 by the distance of Formula 2 is set as a length 1404 of FIG. 16. Here, the actual length 1404 will determined. The maximum speed of the traveling road is a speed limit that is determined for each road, such as 30 km/h or 40 km/h, converted into meters per second. That is, the maximum speed is approximately 8.3 m/h in a case in which the speed limit is 30 km/h and approximately 11.1 m/s in a case in which the speed limit is 40 km/h. The safety factor is made to be 2. It is assumed that the own vehicle 1401 is in such a position that it will take 3 [seconds] to reach the intersection. In this case, when the speed limit on the traveling road of FIG. 16 is 40 km/h, the length 1404 becomes Formula 3.

(Formula 3)

$$(3 \text{ [s]} \times 11.1 \text{ [m/s]} \times 2) + (1 \text{ [s]} \times 11.1 \text{ [m/s]} \times 2) = 88.8 \text{ [m]}$$

In this case, based on Formula 3, the area 1405 is assumed to be from the intersection to a distance of 88.8 meters along the road before the intersection (on the left side in FIG. 16). According to the present embodiment, by setting the left end of area 1405 to a value of Formula 3, it becomes possible to extract substantially all motorcycles that may collide with the own vehicle 1401 in the future.

Next, a setting method of the area 1410 and the area 1411 will be explained. The area 1410 and the area 1411 are areas in which a bicycle is detected. It is assumed that the maximum speed of a bicycle is approximately 40 km/h. If calculated in a similar manner as that described above, the maximum distance that a bicycle that may collide with the own vehicle 1401 at the intersection in the future is currently separated from the intersection becomes Formula 4.

(Formula 4)

$$(3 \text{ [s]} \times 11.1 \text{ [m/s]}) + (1 \text{ [s]} \times 11.1 \text{ [m/s]}) = 44.4 \text{ [m]}$$

In the present Embodiment, each of a length 1406 and a length 1407 shown in FIG. 16 is set to approximately 44.4 meters, as determined by Formula 4. By setting in this manner, it becomes possible to extract substantially all bicycles that may collide with the own vehicle 1401 in the future.

Next, a setting method of the area 1408 and the area 1409 will be explained. The area 1408 and the area 1409 are areas in which a pedestrian is detected. It is assumed that the running speed of a pedestrian is approximately 100 meters in 10 seconds. Therefore, the maximum distance that a pedestrian that may collide with the own vehicle 1401 at the intersection in the future is currently separated from the intersection is 10 meters. For this reason, in the present embodiment, each of a length 1412 and a length 1413 shown in FIG. 16 are set at approximately 10 meters. By setting in this manner, it becomes possible to extract substantially all pedestrians that may collide with the own vehicle 1401 in the future.

In the above description, the concept of an area has been explained. The information that is stored in the information storage unit (memory/HD) 12-4 as an area is each vertex of an area. However, in reality, there are cases in which a road curves. Therefore, in a case in which a list of unique identifiers corresponding to an area is created based on that area, it is preferable to fit a range to a road based on map information stored in the information storage unit (memory/HD) 12-4. This point will be explained below.

As a method for creating a unique identifier list from an area, a method of searching for a unique identifier required in a blind spot accident reduction system using the autonomous moving body control system described above will be explained here.

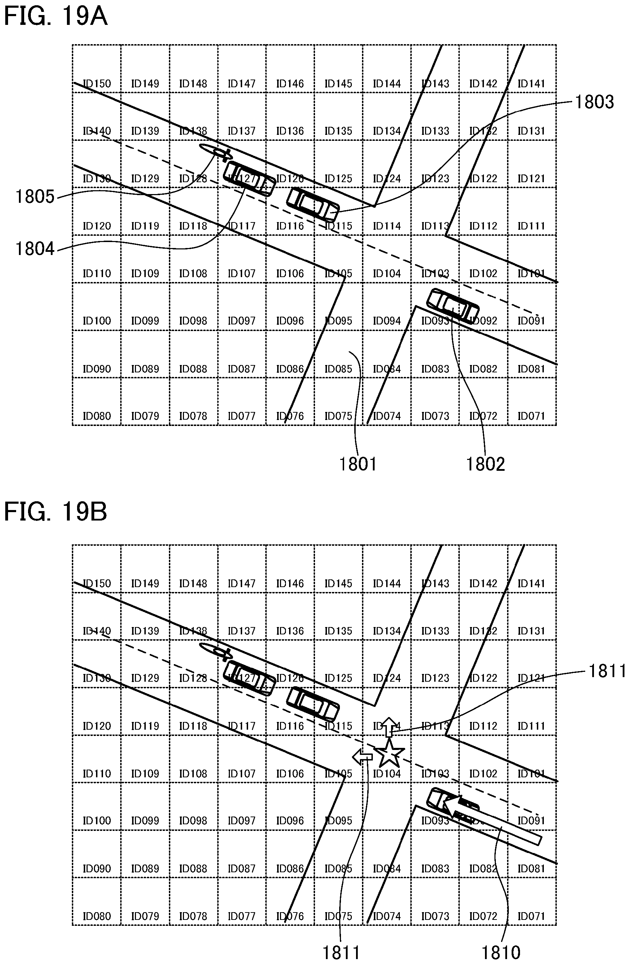

As shown in Table 1203 of FIG. 14A, each of the unique identifiers is associated with a plurality of static and dynamic information. Therefore, when all of the information within all of the ranges specified by the blind spot accident reduction system is transmitted, the communication volume increases, and the processing load of the system increases. Therefore, it is necessary to search for a range that includes the necessary information and create a unique identifier list. Here, a method of performing a search of the area 1405 for detecting a motorcycle in a blind spot accident reduction system will be explained with reference to FIG. 19A and FIG. 19B.

FIG. 19A and FIG. 19B are a diagram that represents an intersection as seen from above, and shows a unique identifier assigned to each space. In FIG. 19A and FIG. 19B, roads are shown as solid lines, and each space with a unique identifier assigned thereto is shown by being divided by broken lines. In FIG. 19A and FIG. 19B, the centerline of the road is also shown as a broken line.

An area 1801, which is an inner area delineated by solid lines, is a roadway on which vehicles travel, and the area of the outer side thereof is a sidewalk. All of the divided spaces are of the same size and are assigned a unique identifier in a continuous sequence from ID 071 to ID 150 from the bottom right to the top left. In reality, a plurality of spaces, each of which also has a unique identifier, are disposed in the vertical direction, but in FIG. 19A and FIG. 19B, the display thereof is omitted.

In FIG. 19A and FIG. 19B, a unique identifier ID 104 is assigned to the space of the area of the intersection. FIG. 19A shows an own vehicle 1802 entering an intersection. An oncoming vehicle 1803 and an oncoming vehicle 1804 are vehicles traveling in the opposite lane to the lane in which the own vehicle 1802 is traveling. In addition, a motorcycle 1805 is a motorcycle that exists in a position that is not visible from the own vehicle 1802 as it becomes a blind spot for the oncoming vehicle 1803 and the oncoming vehicle 1804. FIG. 19B shows the vector in the traveling direction of the own vehicle 1802.

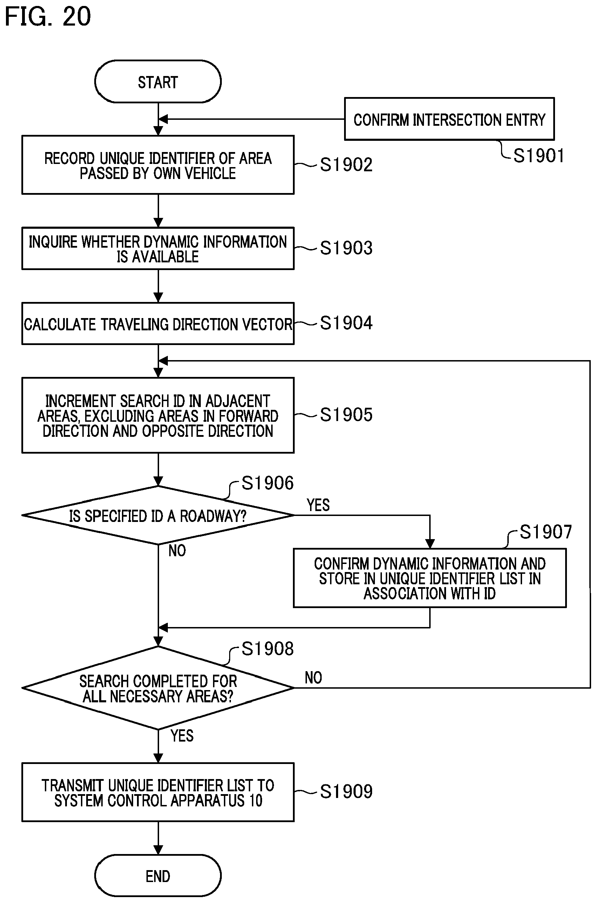

Next, an area search method will be explained with reference to FIG. 20. FIG. 20 is a flowchart showing processing of an area search.

In step S 1901, the system control apparatus 10 detects that the own vehicle 1802 has entered an intersection. As a method of detecting that the own vehicle 1802 has entered an intersection, the front camera of the detection unit 12-1 of the own vehicle 1802, which is an autonomous moving body 12, detects that the own vehicle 1802 has entered an intersection, and the system control apparatus 10 may receive notification to this effect. In addition, as a method of detecting that the own vehicle 1802 has entered an intersection, detection may be performed by comparing the self-position information acquired by using the GPS of the detection unit 12-1 of the own vehicle 1802, which is the autonomous moving body 12, with the map information during traveling. The system control apparatus 10 detects that the own vehicle 1802 has entered an intersection by receiving notification from the own vehicle 1802 as the autonomous moving body 12 that the own vehicle 1802 has entered the intersection. In a case in which the system control apparatus 10 has detected that the own vehicle 1802 has entered an intersection, the system control apparatus 10 executes the processing of step S1902. In a case in which the system control apparatus 10 has detected that the own vehicle 1802 has not entered an intersection, the system control apparatus 10 executes the processing of step S1901. The processing of step S1901 is an example of a determination unit that determines that a moving body has approached a collision danger area, which is an area in which there is a possibility of collision with a collision factor.

In step S1902, the system control apparatus 10 calculates the direction of travel in which the own vehicle 1802 has entered the intersection, and represents the direction of travel by a unique identifier. As a method for calculating the direction of travel of the own vehicle 1802, the direction of travel of the own vehicle 1802 can be calculated from the self-position information detected by the detection unit 12-1, or can be calculated by detecting the own vehicle 1802 by the sensor node 15. As a method of expressing the traveling direction with a unique identifier, the control unit 10-2 of the system control apparatus 10 expresses the traveling direction by converting the own vehicle 1802 and the area information that the own vehicle 1802 has passed through before entering the intersection into a unique identifier.

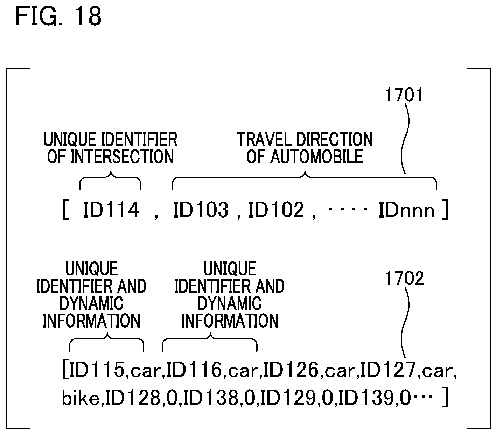

In step S1903, the system control apparatus 10 queries the conversion information holding apparatus 14 through the network connection unit 10-5 as to the presence or absence of dynamic information of the range of the area 1405 from the intersection. The data format and the like that the system control apparatus 10 at this time sends and receives at the time of a query will be explained with reference to FIG. 18.

FIG. 18 is a diagram showing an example of a data format transmitted and received by the system control apparatus 10. Data 1701 is an example of data created in a data format of the data transmitted by the system control apparatus 10 when the system control apparatus 10 performs a query. Data 1702 is an example of data created in a data format of data received by the system control apparatus 10.

The data format of the data transmitted by the system control apparatus 10 at the time of a query is as follows. The data 1701 stores, at the head position thereof, position information of an intersection converted to a unique identifier. Following the unique identifier, the data 1701 stores, as at least two or more consecutive pieces of data, a unique identifier of the road that the own vehicle 1802 has passed along when entering the intersection. The system control apparatus 10 transmits such data as the data 1701 to the conversion information holding apparatus 14.

In step S1904, the conversion information holding apparatus 14 calculates a vector 1810, which is a vector indicating the direction of travel of the own vehicle 1802, from the traveling direction information of the own vehicle 1802 received from the system control apparatus 10.

In step S1905, the conversion information holding apparatus 14 searches for a unique identifier of a space adjacent to the intersection. At this time, when searching for a unique identifier in an adjacent space, the conversion information holding apparatus 14 does not search for a unique identifier in a direction having a vector component opposite to the vector 1810. That is, the conversion information holding apparatus 14 performs a search only in a direction 1811 that has the same vector component as the vector 1810. At the time that the own vehicle 1802 has reached the intersection, it is considered that the own vehicle has already passed the dynamic information present in spaces oriented in a direction opposite to the vector 1810, indicating that the own vehicle has already moved beyond the intersection.

In step S1906, the conversion information holding apparatus 14 confirms whether or not a space indicated by a searched unique identifier is a roadway from the information managed in the unique identifier management unit 14-2. In a case in which the space is not a roadway, the conversion information holding apparatus 14 executes the processing of step S1908, and does not execute a search as to whether there is dynamic information in the data managed by the unique identifier of that space. In a case in which the space is a roadway, the conversion information holding apparatus 14 performs the processing of step S 1907.

In step S1907, the conversion information holding apparatus 14 confirms dynamic information included in the data managed by the unique identifier of the space. In addition, in step S1907, the conversion information holding apparatus 14 associates the dynamic information in the data with the unique identifier, and stores the position information of the dynamic information and the unique identifier in the unique identifier list.

In the case of the example of FIG. 19A and FIG. 19B, the conversion information holding apparatus 14 starts a search from a space indicated by the unique identifier of ID 104, performs a search of the spaces indicated by unique identifiers ID 105, ID 106, and ID107, and confirms that they are roadways, and confirms the presence or absence of dynamic information. Thereafter, when the conversion information holding apparatus 14 confirms that an ID 108 is a sidewalk rather than a roadway, the conversion information holding apparatus 14 does not then execute a search in the direction of an ID 109. A unique identifier list that has been created by such a search is an example of a list in which information of a collision factor of a space of a collision hazard area is initially stored, and in which information of a collision factor in a space separated from the collision hazard area in the same direction as the traveling direction of the moving body is stored sequentially.

In step S 1908, the conversion information holding apparatus 14 determines whether a search of all necessary areas has been completed. The conversion information holding apparatus 14 executes the processing in S 1909 in a case in which the search of all necessary areas has been completed. The conversion information holding apparatus 14 executes the processing in S 1905 in a case in which the search of all necessary areas has not been completed.

In step S1909, the conversion information holding apparatus 14 transmits the unique identifier list to the system control apparatus 10. Data 1702 is an example of a unique identifier list. As with the data 1702, in the unique identifier list, a unique identifier is stored in association with dynamic information in a case in which there is dynamic information in the unique identifier list. In a case in which there is no dynamic information in a unique identifier list, the unique identifier list stores the unique identifier and 0. In the example of FIG. 18, a character string is used as dynamic information, but it is not limited thereto and can be represented by symbols or numbers that can uniquely specify the dynamic information. In step S1909, the processing by which the system control apparatus 10 receives and acquires the unique identifier list is an example of a list acquisition unit that acquires a unique identifier list that is stored by associating information of a collision factor with a unique identifier linked to a space in which the collision factor exists.

According to the present embodiment, by creating a unique identifier list as described above, it is possible to know the collision factor that may collide with the own vehicle by dynamic information, including a collision factor positioned in a blind spot. Therefore, according to the present embodiment, it is possible to acquire information necessary for determining a collision factor in a blind spot accident reduction system. In addition, according to the present embodiment, because it is possible to omit information in the unique identifier list that is unnecessary in determining a collision factor, it becomes possible to reduce the communication volume and the processing load.

Next, a method in which the control unit 10-2 of the system control apparatus 10 detects a collision factor such as a motorcycle, a bicycle, a pedestrian, and the like that may collide with the own vehicle from a unique identifier list of each area created as described above will be explained.

The collision factor detected differs for each area. In a case of a unique identifier list of the area 1405, a motorcycle is detected. In a case of a unique identifier list of the area 1410 and the area 1411, a bicycle is detected. In a case of a unique identifier list of the area 1408 and the area 1409, a pedestrian is detected.

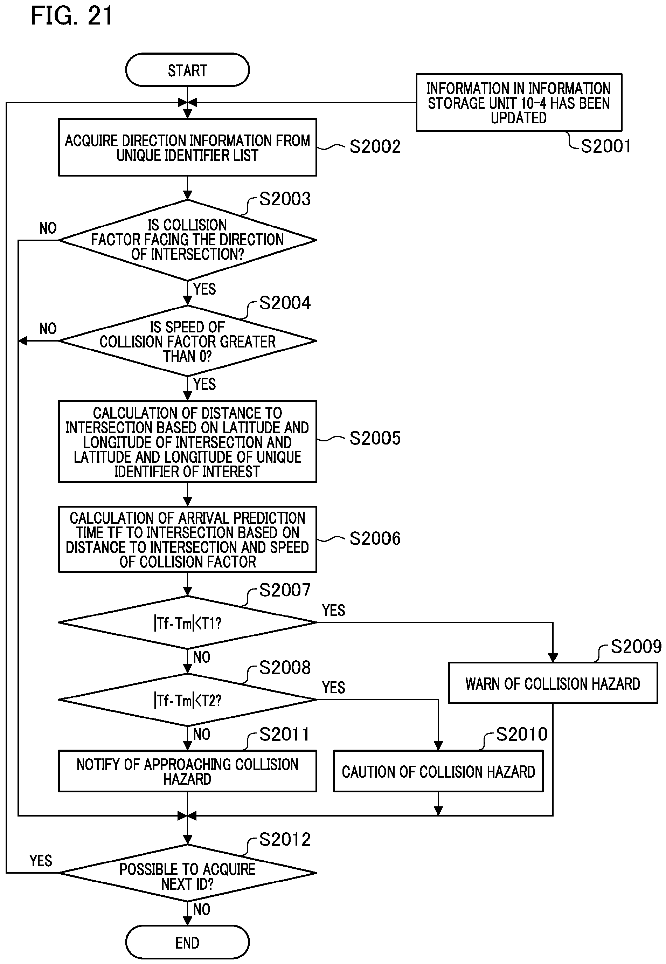

FIG. 21 is a flowchart showing processing of detecting a collision factor from a unique identifier list. The blind spot accident reduction system can individually search the unique identifier list that has been generated for each area by parallel processing. In FIG. 21, a method of search processing for a single unique identifier list is explained.

As described above, a unique identifier list that has been created in response to the entry of the autonomous moving body 12 into the intersection is stored in the information storage unit 10-4 of the system control apparatus 10. Interrupt processing is executed when triggered by an update of this unique identifier list, and the processing shown in the flowchart of FIG. 21 is executed. In step S2001, upon detecting that the unique identifier list has been updated, the system control apparatus 10 executes the processing of step S2002.

In step S2002, the system control apparatus 10 acquires the direction information of the dynamic information of the collision factor to be searched from within the unique identifier list. As mentioned above, the dynamic information in the table 1203 of FIG. 14A is listed in the unique identifier list.

In step S2003, the system control apparatus 10 confirms the direction toward which the collision factor is facing. If the collision factor is facing the direction of the intersection, the system control apparatus 10 executes the processing of step S2004, assuming that there is a possibility that the collision factor enters the intersection. If the collision factor is not facing the direction of the intersection, the system control apparatus 10 executes the processing of step S2012, assuming that the collision factor will not enter the intersection.

In step S2004, the system control apparatus 10 confirms the speed of the collision factor. If the speed of the collision factor is 0, that is, the collision factor is stationary, the system control apparatus 10 assumes that there is no entry of the collision factor into the intersection, and executes the processing of step S2012. If the speed of the collision factor is not zero and the collision factor is in motion, the system control apparatus 10 executes the processing of step S2005, assuming that there is a possibility that the collision factor enters the intersection.

As described above, at the time at which the system control apparatus 10 generates a unique identifier list, the information storage unit 10-4 stores the latitude and longitude, which are the position information of the intersection. In addition, the latitude and longitude position information of the unique identifier that has been assigned to the space in which a collision factor exists (unique identifier of interest) is stored in the unique identifier information of the unique identifier list. In step S2005, the system control apparatus 10 calculates a distance D from the collision factor to the intersection by using the position information of these intersections and the position information of the unique identifier of interest.

In step S2006, the system control apparatus 10 calculates a collision factor prediction time Tf, which is the predicted time it takes for the collision factor to arrive at the intersection, according to Formula 5.

$$(\text{Formula 5})$$

$$Tf = D/S - Ts$$

In Formula 5, D is a distance from the collision factor to the intersection calculated at step S2005, S is a speed of the collision factor acquired from the format database 14-4, and Ts is a time difference between the current time and the update time of the unique identifier. Because the distance D is a value calculated by using information at a time that is a time difference Ts earlier than the current time, a collision factor prediction time Tf is obtained by subtracting Ts from the time obtained by dividing the distance D by the speed S.

In step S2007 and step S2008, the system control apparatus 10 determines the relationship between the predicted collision factor time Tf obtained in step S2006 and the own vehicle prediction time Tm, which is a predicted time at which the own vehicle arrives at the intersection. That is, the system control apparatus 10 performs a determination as to whether there is a possibility of a collision between the own vehicle and the collision factor based on the difference between Tf and Tm.

In step S2007, the system control apparatus 10 determines whether the absolute value of the difference between Tf and Tm (|Tf-Tm|) is smaller than a first threshold value T1. In a case in which the absolute value of the difference between Tf and Tm is smaller than the first threshold value T1, the system control apparatus 10 performs the processing of step S2009. In the present embodiment, T1 is set to be, for example, 3 seconds. In a case in which the absolute value of the difference between Tf and Tm is smaller than the first threshold value T1, the system control apparatus 10 determines that there is a high possibility of a collision. In a case in which the absolute value of the difference between Tf and Tm is not smaller than the first threshold value T1, the system control apparatus 10 executes the processing of step S2008.

In step S2009, because there is a high risk that a collision factor that exists in the space to which a current unique identifier is assigned may collide with the autonomous moving body 12, which is the own vehicle, the system control apparatus 10 transmits a warning to the autonomous moving body 12. When the control unit 12-2 of the autonomous moving body 12 receives the warning from the system control apparatus 10, the control unit 12-2 controls a driving unit 12-6 so as to temporarily stop a right turn of the autonomous moving body 12. It should be noted that there may be a case in which, when the control unit 12-2 receives a warning from the system control apparatus 10, the control unit 12-2 executes processing of notifying the driver of the autonomous moving body 12 that a temporary stop of the right turn has been executed. Furthermore, there may also be a case in which the control unit 12-2, upon receiving a warning from the system control apparatus 10, executes processing to strongly warn the driver of the autonomous moving body 12 to temporarily stop the right turn. A warning in this case is executed by a warning display or a warning sound output to the driver.

In step S2008, the system control apparatus 10 determines whether the absolute value of the difference between Tf and Tm ($|Tf-Tm|$) is smaller than a second threshold value T2. The second threshold T2 is greater than the first threshold T1. In a case in which the absolute value of the difference between Tf and Tm is smaller than the second threshold T2, the system control apparatus 10 performs the processing of step S2010. In the present embodiment, T2 is set to be, for example, 10 seconds. In a case in which the absolute value of the difference between Tf and Tm is smaller than the second threshold value T2, the system control apparatus 10 determines that there is a possibility of a collision. In a case in which the absolute value of the difference between Tf and Tm is not smaller than the second threshold value T2, the system control apparatus 10 executes the processing of step S2011.

In step S2010, because there is a possibility that a collision factor that exists in the space to which a current unique identifier is assigned may collide with the autonomous moving body 12, which is the own vehicle, the system control apparatus 10 transmits a caution to the autonomous moving body 12, which is the own vehicle. When the control unit 12-2 of the autonomous moving body 12 receives the caution from the system control apparatus 10, the control unit 12-2 determines whether or not the autonomous moving body 12 should be stopped according to the detection control of the autonomous moving body 12 and the response performance of the driving unit, and the like. The control unit 12-2 controls a driving unit 12-6, and temporarily stops the right turn of the autonomous moving body 12 in a case in which the performance of the autonomous moving body 12 is not sufficiently good. In a case in which the performance of the autonomous moving body 12 is good, the control unit 12-2 may limit processing to the execution of a caution display and caution sound output to the driver, and there may be a case in which the control unit 12-2 does not execute the processing to temporarily stop the right turn of the autonomous moving body 12. It should be noted that in a case in which the control unit 12-2 has temporarily stopped the right turn of the autonomous moving body 12, there may also be a case in which the control unit 12-2 executes processing to notify the driver of the autonomous moving body 12 that the right turn has been temporarily stopped. Furthermore, there may also be a case in which the control unit 12-2, upon receiving a caution from the system control apparatus 10, executes processing to caution the driver of the autonomous moving body 12 to temporarily stop the right turn. A caution in this case is executed by a caution display or a caution sound output to the driver.

In step S2011, the system control apparatus 10 transmits a notification to the autonomous moving body 12, which is the own vehicle, indicating that a collision factor is approaching. When the control unit 12-2 of the autonomous moving body 12 receives a notification from the system control apparatus 10 indicating that a collision factor is approaching, the control unit 12-2 determines that the collision factor is approaching but not within collision distance, and controls a driving unit 12-6 so as to cause the autonomous moving body 12 to promptly turn right. It should be noted that there may be a case in which, when the control unit 12-2 receives a notification from the system control apparatus 10 indicating that a collision factor is approaching, the control unit 12-2 executes processing for notifying the driver of the autonomous moving body system 12 that the collision factor is approaching. Furthermore, there may be a case in which, when the control unit 12-2 receives a notification from the system control apparatus 10 indicating that a collision factor is approaching, the control unit 12-2 executes processing for notifying the driver of the autonomous moving body 12 to promptly turn right because the collision factor is approaching. A notification in this case is the execution of a notification display or a notification sound output to the driver.

When the warning by the processing of step S2019, the caution by the processing of step S2010, or the notification by the processing of step S2011 is complete, the system control apparatus 10 executes the processing of step S2012. The warning by the processing of step S2019, the caution by the processing of step S2010, and the processing of step S2011 are examples of a collision avoidance control unit that performs control so as to avoid a collision with a collision factor of a moving body according to the level of collision risk. The warning by the processing of step S2019, the caution by the processing of step S2010, and the processing of step S2011 are examples of performing a notification corresponding to a high collision risk to a moving body.

In step S2012, the system control apparatus 10 confirms whether a unique identifier still remains to be searched for in the unique identifier list. In a case in which there still remains a unique identifier to be searched, the system control apparatus 10 performs the processing of step S2002. The system control apparatus 10 terminates the processing in a case in which there is no unique identifier remaining to be searched.

In the present embodiment, it is assumed that the processing time is several hundred [ms] from the start of the processing to the end of the processing of FIG. 21. Even after the processing of FIG. 21 has ended, the processing of FIG. 21 is activated repeatedly each time the unique identifier list is updated.

(Third Embodiment)

In the Second Embodiment described above, a unique identifier list was generated from a predetermined area, and a collision factor was determined from a unique identifier list. However, when the own vehicle is moving at a high speed or if there is a delay in the recognition of the front vehicle-mounted camera, the detection of the collision factor may be delayed. Furthermore, in the Second Embodiment, when creating the unique identifier list, the dynamic information of a unique identifier was acquired from an intersection. In a Third Embodiment of the present invention, a method of quickly searching for a collision factor by changing the creation starting point of a unique identifier list will be explained. In the Third Embodiment, a method is provided to detect a collision factor earlier than in the Second Embodiment by changing the starting point for creating the unique identifier list according to the speed information of an oncoming vehicle.

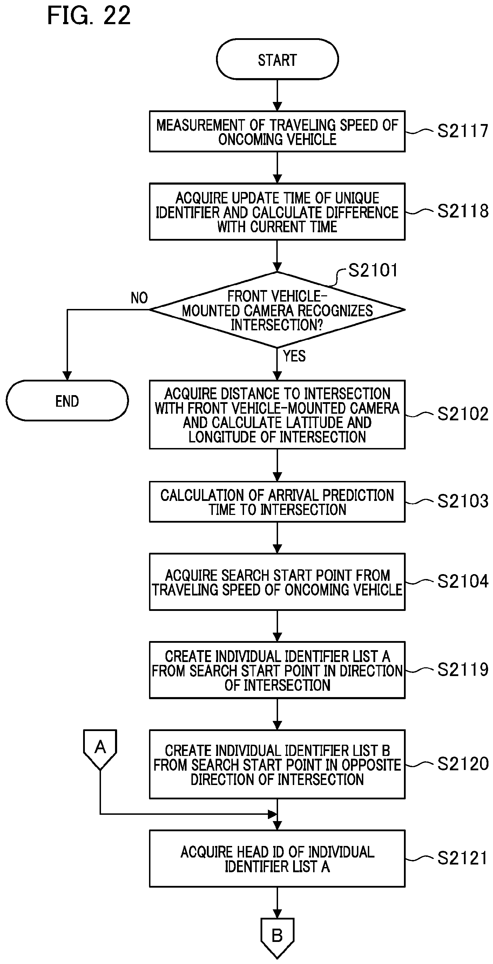

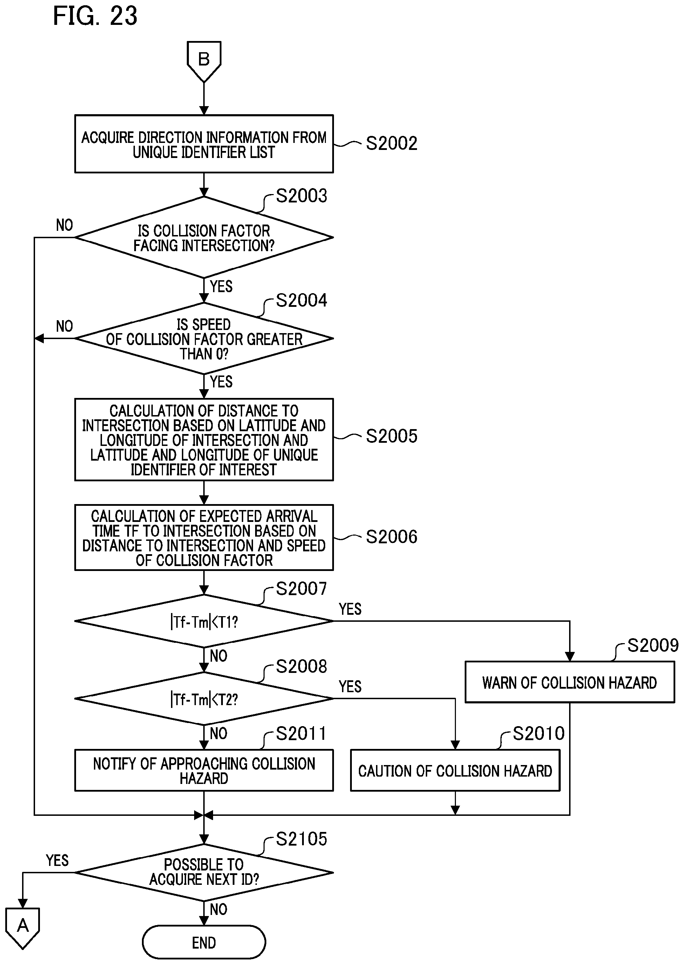

FIG. 22 is a flowchart showing processing of detecting a collision factor in the Third Embodiment. FIG. 23 is a flowchart showing processing of detecting a collision factor in the Third Embodiment, and is a continuation of FIG. 22. The processing of FIG. 22 and FIG. 23 is performed each time a front vehicle-mounted camera of the autonomous moving body 12, which is the own vehicle, captures a single frame.

In step S2117, the autonomous moving body 12, which is the own vehicle, simultaneously measures the traveling speed of an oncoming vehicle when the processing of FIG. 22 and FIG. 23 is started. In the present embodiment, the autonomous moving body 12 can perform distance measurement to an oncoming vehicle by a technique that applies image phase detection AF after recognizing the oncoming vehicle with a front vehicle-mounted camera. The autonomous moving body 12 performs this distance measurement for each frame, and measures the traveling speed of the oncoming vehicle by determining the change in distance to the oncoming vehicle. It should be noted that in a case in which the own vehicle is in motion, the autonomous moving body 12 can measure the traveling speed of the oncoming vehicle by calculating the difference from the traveling speed of the own vehicle. Any known method may be used to measure the traveling speed of an oncoming vehicle. The method for determining a traveling speed of an oncoming vehicle does not constitute the essence of the present embodiment, and therefore a detailed description thereof will be omitted herein. In the present embodiment, it is possible to determine the approximate speed of a car or a motorcycle traveling in the opposite lane by determining the speed of the oncoming vehicle in each frame. The autonomous moving body 12 transmits the traveling speed of an oncoming vehicle measured in step S2117 to the system control apparatus 10. It should be noted that the autonomous moving body 12 transmits an image captured by a front vehicle-mounted camera to the system control apparatus 10, and the system control apparatus 10 may measure the traveling speed of the oncoming vehicle.

In step S2118, the system control apparatus 10 calculates the difference between the update time of a unique identifier and the current time. Specifically, first, the control unit 10-2 of the system control apparatus 10 accesses the format database 14-4 of the conversion information holding apparatus 14 through the network control unit 10-5. By this access, the control unit 10-2 acquires the update time of the dynamic information of around the own vehicle, which is stored in the format database 14-4. The control unit 10-2 calculates the time difference Ts, which is a difference between the acquired updated time and the current time of around the own vehicle, and stores the time difference Ts in the information storage unit 10-4.

The autonomous moving body 12, which is the own vehicle, recognizes whether an intersection exists in an image captured by the front vehicle-mounted camera. In step S2101, the system control apparatus 10 determines whether the front vehicle-mounted camera recognizes an intersection by receiving information from the own vehicle as to whether the own vehicle is recognizing the intersection. It should be noted that the autonomous moving body 12, which is the own vehicle, transmits the image captured by the front vehicle-mounted camera to the system control apparatus 10, and the system control apparatus 10 may execute processing for recognizing whether an intersection exists in the received image. In the recognition of an intersection, a map stored in the information storage unit 10-4 and GPS information from the detection unit 12-1 may be used, and the intersection may be recognized when the intersection becomes 100 meters ahead. The system control apparatus 10 terminates the processing if the front vehicle-mounted camera does not recognize an intersection. The system control apparatus 10 executes the processing of step S2102 if the front vehicle-mounted camera recognizes an intersection.

In step S2102, the system control apparatus 10 calculates the latitude and longitude of a recognized intersection. Specifically, the distance to an intersection can be acquired by using the front vehicle-mounted camera of the autonomous moving body 12, which is the own vehicle, and the latitude and longitude of the intersection can be determined from the own vehicle position. Similar to when the speed of an oncoming vehicle was acquired, the distance to the intersection can be measured by a technique that applies image phase detection AF of the front vehicle-mounted camera. In addition, as an alternative method, the position coordinates of the next intersection may be calculated based on the latitude and longitude position information of the own vehicle calculated by the GPS held by the detection unit 12-1 of the autonomous moving body 12, which is the own vehicle, and a map that has been stored in the information storage unit 10-4.

In step S2103, the system control apparatus 10 determines the arrival prediction time Tm, which is the predicted time it takes for the own vehicle to arrive at the intersection. The system control apparatus 10 can determine the arrival prediction time Tm from the distance to the intersection obtained in step S2102 and the traveling speed of the own vehicle.

According to present embodiment, in particular, a search of a high-speed collision factor is realized by the configuration explained below. In step S2104, the system control apparatus 10 acquires the search start point from the traveling speed of the oncoming vehicle obtained in step S2117. In the Second Embodiment, the search was started from the space of the position of the intersection. In the Third Embodiment, a search is started from the space in which a collision factor with a high possibility of colliding with the own vehicle is estimated to currently exist.

In the present embodiment, a space in which a collision factor with a high possibility of colliding with the own vehicle is estimated to currently exist by using the position coordinates of the intersection, the time difference Ts between the update time of the dynamic information and the current time, the arrival prediction time Tm at which is the prediction time it takes for a vehicle to arrive at an intersection, and the traveling speed St of the oncoming vehicle. The coordinates of this estimated space are the coordinates of a space in which the collision factor arriving at the intersection after Tm has elapsed is considered to be currently traveling and is the search start point. The position coordinates of the intersection were obtained in the processing of step S2102. The position coordinates of the intersection were obtained in the processing of step S2102. The time difference Ts between the update time of the dynamic information and the current time was obtained in the processing of step S2118. The arrival prediction time Tm, which is the time it takes for the own vehicle to arrive at the intersection, was obtained in step S2103. The traveling speed St of the oncoming vehicle was obtained in step S2117.

Specifically, the search start point is set to a position separated by a distance shown by Formula 6 along the path of the oncoming lane from the position coordinates of the intersection.

$$(\text{Formula 6})$$

$$(Tm + Ts) \times St$$

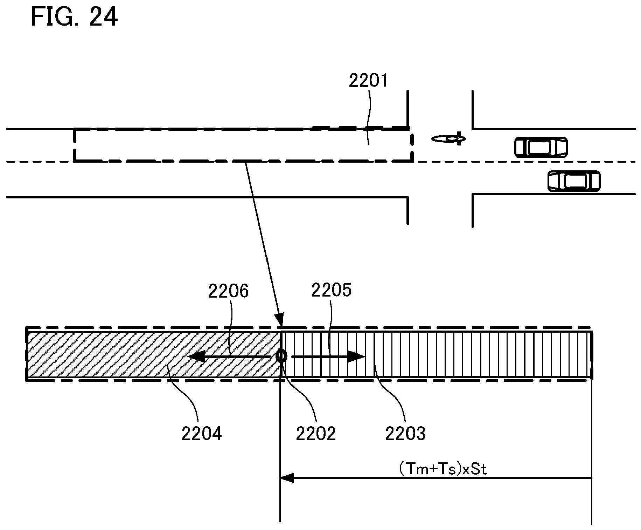

FIG. 24 is a diagram explaining a search start point in the Third Embodiment. An area 2201 is the same area as the area 1405 of FIG. 16. In FIG. 24, the area 2201 is shown enlarged at the bottom. The area 2201 consists of an area 2203 and an area 2204. A mark 2202 is positioned at the boundary of the area 2203 and the area 2204. The mark 2202 indicates the search start point that was acquired in step S2104 of FIG. 22. The mark 2202 is an example of a space in which a collision factor that arrives in a collision hazard area when a moving body arrives in the collision hazard area may currently exist. The search start point indicated by this mark 2202 is an estimated position in which a collision factor that may collide when the own vehicle arrives at the intersection is currently traveling, under the condition that the oncoming vehicle is traveling at approximately the same speed. In Formula 6, the time difference Ts between the update time of the dynamic information and the current time is added to the arrival prediction time Tm because the search target uses the information of the format database 14-4 of the conversion information holding apparatus 14. Because there is a time lag in the update time of the format database 14-4, in the present embodiment, the search start point is a point at which that time lag is also taken into account. In this manner, the format database 14-4 is confirmed for the existence of a collision factor based on the unique identifier at the calculated search start point.

In step S2119, the system control apparatus 10 creates a list A of unique identifiers (hereinafter, "unique identifier list A") toward the intersection from the search start point acquired in step S2104. Because the creation method of the list is similar to that of the Second Embodiment, a detailed explanation thereof will be omitted.

In step S2120, the system control apparatus 10 creates a list B of unique identifiers (hereinafter "unique identifier list B") in the opposite direction of the intersection from the search start point acquired in step S2104. Because the creation method of the list is similar to that of the Second Embodiment, a detailed explanation thereof will be omitted.

The range of the unique identifier list A created in step S2119, and the range of the unique identifier list B created in step S2120 will be explained with reference to FIG. 24.

The system control apparatus 10 detects dynamic information within a unique identifier in the direction of arrow 2205 from the search start point of mark 2202 and stores the dynamic information in the unique identifier list A. The unique identifier list A is a first-in-first-out (FIFO) structure, such that the first stored unique identifier is the first to be read out. As a result, the dynamic information of a unique identifier in the area of the area 2203 is listed in the unique identifier list A.

The system control apparatus 10 detects dynamic information within a unique identifier in the direction of an arrow 2206 from the search start point of mark 2202 and stores the dynamic information in the unique identifier list B. The unique identifier list B is a first-in-first-out (FIFO) structure, such that the first stored unique identifier is the first to be read out. As a result, the dynamic information of the unique identifier in the area of area 2204 is listed in the unique identifier list B. That the unique identifier list A and the unique identifier list B have a FIFO structure is an example of performing control so as to avoid a collision based on information of the collision factor in sequential order from information of the collision factor that has been stored first in the unique identifier list, according to a level of collision risk.

The explanation of FIG. 22 will now continue. In step S2121, the system control apparatus 10 acquires the data of the unique identifier of the head of the unique identifier list A. Specifically, the dynamic information in Table 1203 of FIG. 14A is acquired. Because the subsequent steps from step S2002 to step S2011 are the same as those in step S2002 to step S2011 of FIG. 21, an explanation thereof will be omitted.

In step S2105, the system control apparatus 10 confirms whether there is an unconfirmed unique identifier in the unique identifier list A and the unique identifier list B. The system control apparatus 10 terminates the processing in a case in which all of the moving body information of the unique identifiers listed in both lists has been confirmed. The system control apparatus 10 executes the processing of step S2121 in a case in which all of the moving body information of the unique identifiers listed in both lists has not been confirmed.

In step S2121, the system control apparatus 10 acquires unique identifier data so as to process the data in the unique identifier list A alternately with the data in the unique identifier list B. In a case in which the system control apparatus 10 has acquired the data of the unique identifier of the head of the unique identifier list A in the previous step S2121, the system control apparatus 10 acquires the data of the unique identifier of the head of the unique identifier list B in the current step S2121. In a case in which the system control apparatus 10 has acquired the data of the unique identifier of the head of the unique identifier list B in the previous step S2121, the system control apparatus 10 acquires the data of the second unique identifier from the head of the unique identifier list A in the current step S2121. By alternating between the confirmation of unique identifier list A and unique identifier list B, the system control apparatus 10 can confirm from the unique identifier closest to the mark 2202, thereby reducing the time required to identify a collision factor.

According to the Second Embodiment and Third Embodiment explained above, it is possible to provide a blind spot accident reduction system by using an autonomous moving body control system.

As explained above, according to each of the embodiments of the present invention, the format of the digital architecture and the autonomous moving body control system using same are provided more efficiently, taking safety into consideration.

It should be noted that in each of the embodiments described above, an example in which a control system is applied to an autonomous moving body has been explained. However, the present invention is not limited to an autonomous moving body such as an Automatic Guided Vehicle (AGV) or Autonomous Mobile Robot (AMR). For example, an autonomous moving body may be any moving apparatus that moves, such as an automobile, a train, a ship, an airplane, a robot, a drone, and the like. In addition, the control system of the present invention may be partially mounted thereon, or may not be mounted thereon. Furthermore, the present invention can also be applied in a case in which a moving body is controlled remotely.

(Other Embodiments)

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

This application claims the benefit of Japanese Patent Application No. 2022-145035, filed September 13 2022, which is hereby incorporated by reference wherein in its entirety.

An information processing apparatus is configured to determine that a moving body has approached a collision hazard area, which is an area in which there is a possibility of collision with a collision factor, acquire a unique identifier list that is stored by associating information of the collision factor with a unique identifier linked to a space in which the collision factor exists, in a case in which it has been determined that the moving body has approached the collision hazard area, and perform control to the moving body so as to avoid a collision with the collision factor, according to the level of collision risk, based on the information of the collision factor that has been stored in the unique identifier list.

**Claims**

1. An information processing apparatus comprising:
   a memory storing instructions; and
   a processor executing the instructions causing the information processing apparatus to:

   determine that a moving body has approached a collision hazard area, which is an area in which there is a possibility of collision with a collision factor;
   acquire a unique identifier list that is stored by associating information of the collision factor with a unique identifier linked to a space in which the collision factor exists, in a case in which it has been determined that the moving body has approached the collision hazard area; and
   perform control to the moving body so as to avoid a collision with the collision factor, according to a level of collision risk, based on the information of the collision factor that has been stored in the unique identifier list.

2. The information processing apparatus according to claim 1, wherein the unique identifier list is a list in which information of the collision factor that exists within a collision factor area that has been defined according to the collision hazard area has been stored.

3. The information processing apparatus according to claim 1, wherein the unique identifier list is a list in which information of the collision factor of a space of the collision hazard area is initially stored, and in which information of the collision factor of a space separated from the collision hazard area in the same direction as the traveling direction of the moving body is stored sequentially.

4. The information processing apparatus according to claim 1, wherein the unique identifier list is a list in which information of the collision factor of a space in which the collision factor that arrives in the collision hazard area when the moving body has arrived in the collision hazard area may currently exist is initially stored, and in which information of the collision factor of a space separated from the space in which the collision factor may currently exist is stored sequentially.

5. The information processing apparatus according to claim 1, wherein perform control so as to avoid a collision, based on information of the collision factor in sequential order from information of the collision factor that has been stored first in the unique identifier list, according to a level of collision risk.

6. The information processing apparatus according to claim 1, wherein perform notification to the moving body according to a level of collision risk.

7. A control method of an information processing apparatus, the control method comprising:

   determining that a moving body has approached a collision hazard area, which is an area in which there is a possibility of collision with a collision factor;
   acquiring a unique identifier list that is stored by associating information of the collision factor with a unique identifier linked to a space in which the collision factor exists, in a case in which it has been determined that the moving body has approached the collision hazard area; and
   performing control to the moving body so as to avoid a collision with the collision factor, according to a level of collision risk, based on the information of the collision factor that has been stored in the unique identifier list.

8. A non-transitory storage medium storing a control program of an information processing apparatus, the control program causing a computer to perform each step of a control method for the information processing apparatus, the control method comprising:

   determining that a moving body has approached a collision hazard area, which is an area in which there is a possibility of collision with a collision factor;

acquiring a unique identifier list that is stored by associating information of the collision factor with a unique identifier linked to a space in which the collision factor exists, in a case in which it has been determined that the moving body has approached the collision hazard area; and

performing control to the moving body so as to avoid a collision with the collision factor, according to a level of collision risk, based on the information of the collision factor that has been stored in the unique identifier list.

# FIG. 1

EP 4 339 919 A1

FIG. 2A

40

ROUTE SETTING APPLICATION
DEPARTURE LOCATION, TRANSIT LOCATION,
ARRIVAL LOCATION INPUT SCREEN

MOBILITY LIST ⎯ 48

DEPARTURE
LOCATION          AAA                    ⎯ 41

TRANSIT
LOCATION 1        BBB                    ⎯ 42

TRANSIT
LOCATION 2                               ⎯ 46

ARRIVAL
LOCATION          CCC                    ⎯ 43

ADD TRANSIT
LOCATION                    DECISION

44                          45

FIG. 2B

47

ROUTE SETTING APPLICATION
MOBILITY LIST

            NAME              FORMAT

M1:  MOBILITY 1    COMPACT MOBILITY

M2:  MOBILITY 2    COMPACT MOBILITY

M3:  MOBILITY 3    DRONE

27

## FIG. 3A

50

ROUTE SETTING APPLICATION
STATUS CONFIRMATION SCREEN

DEPARTURE
LOCATION — AAA — 51

56 — CURRENT LOCATION — 52

TRANSIT
LOCATION 1 — BBB

ARRIVAL
LOCATION — CCC — 53

REFRESH — 57

CHANGE TRANSIT LOCATION/
ARRIVAL LOCATION — DISPLAY MAP

54 — 55

## FIG. 3B

ARRIVAL LOCATION

60

TRANSIT
LOCATION

RETURN

DEPARTURE
LOCATION — 62 — CURRENT
LOCATION — 61

# FIG. 4

← → 16 INTERNET

**AUTONOMOUS MOVING BODY** 12

- 12-1 DETECTION UNIT
- 12-2 CONTROL UNIT
- 12-3 DIRECTION CONTROL UNIT
- 12-4 INFORMATION STORAGE UNIT (MEMORY/HD)
- 12-5 NETWORK CONNECTION UNIT
- 12-6 DRIVING UNIT

**SYSTEM CONTROL APPARATUS** 10

- 10-1 UNIQUE IDENTIFIER MANAGEMENT UNIT
- 10-2 CONTROL UNIT
- 10-3 POSITION/ROUTE INFORMATION MANAGEMENT UNIT
- 10-4 INFORMATION STORAGE UNIT (MEMORY/HD)
- 10-5 NETWORK CONNECTION UNIT

**USER INTERFACE** 11

- 11-1 OPERATION UNIT
- 11-2 CONTROL UNIT
- 11-3 DISPLAY UNIT
- 11-4 INFORMATION STORAGE UNIT (MEMORY/HD)
- 11-5 NETWORK CONNECTION UNIT

**SENSOR NODE** 15

- 15-1 DETECTION UNIT
- 15-2 CONTROL UNIT
- 15-3 INFORMATION STORAGE UNIT (MEMORY/HD)
- 15-4 NETWORK CONNECTION UNIT

**CONVERSION INFORMATION HOLDING APPARATUS** 14

- 14-1 POSITION/ROUTE INFORMATION MANAGEMENT UNIT
- 14-2 UNIQUE IDENTIFIER MANAGEMENT UNIT
- 14-3 CONTROL UNIT
- 14-4 FORMAT DATABASE
- 14-5 INFORMATION STORAGE UNIT (MEMORY/HD)
- 14-6 NETWORK CONNECTION

**ROUTE DETERMINATION APPARATUS** 13

- 13-1 MAP INFORMATION MANAGEMENT UNIT
- 13-2 CONTROL UNIT
- 13-3 POSITION/ROUTE INFORMATION MANAGEMENT UNIT
- 13-4 INFORMATION STORAGE UNIT (MEMORY/HD)
- 13-5 NETWORK CONNECTION UNIT

EP 4 339 919 A1

FIG. 5A

99-1

(Wx, Wy, Wz)

99

12Y

12

αY

α0

NORTH

WEST          EAST

SOUTH

FIG. 5B

P2 (X2, Y2, Z2)

Z

c

Y

(X1, Y1, Z1)

P1

X

P0

FIG. 6

FORWARD, BACKWARD

CHANGE IN
MOVEMENT DIRECTION

FIG. 7

# FIG. 8

EP 4 339 919 A1

FIG. 9

EP 4 339 919 A1

# FIG. 10

Autonomous moving body (12), Sensor node (15), Conversion information holding apparatus (14), Route determination apparatus (13), System control apparatus (10), User interface (11).

Steps: S224 Spatial information transmission, S225 Spatial information update, S226 Unique identifier transmission, S227 Current position information display, S232 Detection information storage, S233 Detection information abstraction, S234 Spatial information transmission, S235 Spatial information update, S236, S237 Cost map update / Spatial information download, S238 Polling, S239 Arrival point / Arrival, S240 Cost map download, S241 Current position information display / Unique identifier transmission.

FIG. 11A

FIG. 11B

FIG. 12

FIG. 13A

ARRIVAL LOCATION

121

122

DEPARTURE
LOCATION

120

TRANSIT
LOCATION

FIG. 13B

123

ARRIVAL LOCATION

DEPARTURE
LOCATION

120

TRANSIT
LOCATION

FIG. 13C

124

ARRIVAL LOCATION

DEPARTURE
LOCATION

120

TRANSIT
LOCATION

# FIG. 14A

| | STATIC INFORMATION | | | DYNAMIC INFORMATION 1203 | | | | | | | | | | |
|---|---|---|---|---|---|---|---|---|---|---|---|---|---|---|
| | VOXEL POSITION DATA | | | OBJECT RECOGNITION INFORMATION | | | | | | | | | | |
| UNIQUE IDENTIFIER | LONGITUDE | LATITUDE | HEIGHT | UPDATE DATE/TIME | AUTOMOBILE | | MOTORCYCLE | | BICYCLE | | PERSON | | OTHER | |
| | | | | | DIRECTION | SPEED | DIRECTION | SPEED | DIRECTION | SPEED | DIRECTION | SPEED | DIRECTION | SPEED |
| ⟨ID001⟩ | ○○ | ○○ | ○○ | 20XX/6/20 17:28 | -1 | -1 | -1 | -1 | -1 | -1 | -1 | -1 | -1 | -1 |
| ⟨ID002⟩ | ○○ | ○○ | ○○ | 20XX/6/20 17:28 | -1 | -1 | -1 | -1 | 94 | 0 | -1 | -1 | -1 | -1 |
| ⟨ID003⟩ | ○○ | ○○ | ○○ | 20XX/6/20 17:28 | -1 | -1 | -1 | -1 | 94 | 0 | -1 | -1 | -1 | -1 |

# FIG. 14B

EP 4 339 919 A1

FIG. 15A

FIG. 15B

FIG. 16

FIG. 17A

1503 1502

1501

FIG. 17B

1513 1512

1511

FIG. 18

UNIQUE IDENTIFIER        TRAVEL DIRECTION
OF INTERSECTION          OF AUTOMOBILE                    1701

[ ID114 , ID103 , ID102 , · · · · IDnnn ]

UNIQUE              UNIQUE
IDENTIFIER AND      IDENTIFIER AND           1702
DYNAMIC            DYNAMIC
INFORMATION        INFORMATION

[ID115,car,ID116,car,ID126,car,ID127,car,
bike,ID128,0,ID138,0,ID129,0,ID139,0··· ]

## FIG. 19A

## FIG. 19B

## FIG. 20

START

CONFIRM INTERSECTION ENTRY ⌐S1901

RECORD UNIQUE IDENTIFIER OF AREA PASSED BY OWN VEHICLE ～S1902

INQUIRE WHETHER DYNAMIC INFORMATION IS AVAILABLE ～S1903

CALCULATE TRAVELING DIRECTION VECTOR ～S1904

INCREMENT SEARCH ID IN ADJACENT AREAS, EXCLUDING AREAS IN FORWARD DIRECTION AND OPPOSITE DIRECTION ～S1905

S1906
IS SPECIFIED ID A ROADWAY?

YES

NO

S1907
CONFIRM DYNAMIC INFORMATION AND STORE IN UNIQUE IDENTIFIER LIST IN ASSOCIATION WITH ID

S1908
SEARCH COMPLETED FOR ALL NECESSARY AREAS?

NO

YES

TRANSMIT UNIQUE IDENTIFIER LIST TO SYSTEM CONTROL APPARATUS 10 ～S1909

END

## FIG. 21

```
                    ┌─────────────┐
                    │    START    │
                    └─────────────┘
```

INFORMATION IN INFORMATION STORAGE UNIT 10-4 HAS BEEN UPDATED — S2001

ACQUIRE DIRECTION INFORMATION FROM UNIQUE IDENTIFIER LIST — S2002

S2003 — IS COLLISION FACTOR FACING THE DIRECTION OF INTERSECTION? — NO

YES

S2004 — IS SPEED OF COLLISION FACTOR GREATER THAN 0? — NO

YES

CALCULATION OF DISTANCE TO INTERSECTION BASED ON LATITUDE AND LONGITUDE OF INTERSECTION AND LATITUDE AND LONGITUDE OF UNIQUE IDENTIFIER OF INTEREST — S2005

CALCULATION OF ARRIVAL PREDICTION TIME TF TO INTERSECTION BASED ON DISTANCE TO INTERSECTION AND SPEED OF COLLISION FACTOR — S2006

S2007 — $|Tf-Tm| < T1$? — YES → WARN OF COLLISION HAZARD — S2009

NO

S2008 — $|Tf-Tm| < T2$? — YES → CAUTION OF COLLISION HAZARD — S2010

NO

S2011 — NOTIFY OF APPROACHING COLLISION HAZARD

S2012 — POSSIBLE TO ACQUIRE NEXT ID? — YES / NO

```
                    ┌─────────────┐
                    │     END     │
                    └─────────────┘
```

## FIG. 22

START

MEASUREMENT OF TRAVELING SPEED OF ONCOMING VEHICLE — S2117

ACQUIRE UPDATE TIME OF UNIQUE IDENTIFIER AND CALCULATE DIFFERENCE WITH CURRENT TIME — S2118

S2101 — FRONT VEHICLE-MOUNTED CAMERA RECOGNIZES INTERSECTION?

NO → END

YES

ACQUIRE DISTANCE TO INTERSECTION WITH FRONT VEHICLE-MOUNTED CAMERA AND CALCULATE LATITUDE AND LONGITUDE OF INTERSECTION — S2102

CALCULATION OF ARRIVAL PREDICTION TIME TO INTERSECTION — S2103

ACQUIRE SEARCH START POINT FROM TRAVELING SPEED OF ONCOMING VEHICLE — S2104

CREATE INDIVIDUAL IDENTIFIER LIST A FROM SEARCH START POINT IN DIRECTION OF INTERSECTION — S2119

A

CREATE INDIVIDUAL IDENTIFIER LIST B FROM SEARCH START POINT IN OPPOSITE DIRECTION OF INTERSECTION — S2120

ACQUIRE HEAD ID OF INDIVIDUAL IDENTIFIER LIST A — S2121

B

EP 4 339 919 A1

## FIG. 23

```
                          ┌───┐
                          │ B │
                          └─┬─┘
                            ▼
        ┌──────────────────────────────────┐
        │ ACQUIRE DIRECTION INFORMATION FROM│───── S2002
        │      UNIQUE IDENTIFIER LIST       │
        └──────────────┬───────────────────┘
                       ▼           ┌─ S2003
              ╱─────────────────╲
   NO        ╱  IS COLLISION FACTOR ╲
 ◄──────────   FACING INTERSECTION?  
             ╲                    ╱
              ╲─────────┬────────╱
                     YES│       ┌─ S2004
                        ▼
              ╱─────────────────╲
   NO        ╱    IS SPEED        ╲
 ◄────────── OF COLLISION FACTOR GREATER
             ╲      THAN 0?       ╱
              ╲────────┬─────────╱
                    YES│
                       ▼
        ┌──────────────────────────────────┐
        │     CALCULATION OF DISTANCE TO    │
        │ INTERSECTION BASED ON LATITUDE AND│───── S2005
        │  LONGITUDE OF INTERSECTION AND    │
        │  LATITUDE AND LONGITUDE OF UNIQUE │
        │      IDENTIFIER OF INTEREST       │
        └──────────────┬───────────────────┘
                       ▼
        ┌──────────────────────────────────┐
        │   CALCULATION OF EXPECTED ARRIVAL │
        │  TIME TF TO INTERSECTION BASED ON │───── S2006
        │ DISTANCE TO INTERSECTION AND SPEED│
        │       OF COLLISION FACTOR         │
        └──────────────┬───────────────────┘
                       ▼       ┌─ S2007
              ╱─────────────────╲         YES
             ╱     |Tf-Tm|<T1?    ╲──────────────►
             ╲                    ╱
              ╲────────┬─────────╱
                    NO │   ┌─ S2008
                       ▼
              ╱─────────────────╲         YES
             ╱     |Tf-Tm|<T2?    ╲──────────────►
             ╲                    ╱
              ╲────────┬─────────╱
                    NO │  ┌─ S2011
```

$|Tf-Tm|<T1?$ (S2007)

$|Tf-Tm|<T2?$ (S2008)

WARN OF COLLISION HAZARD ── S2009

NOTIFY OF APPROACHING COLLISION HAZARD ── S2011

CAUTION OF COLLISION HAZARD ── S2010

```
              ╱─────────────────╲
   YES       ╱    POSSIBLE TO     ╲    ┌─ S2105
 ◄────────── ACQUIRE NEXT ID?
             ╲                    ╱
              ╲────────┬─────────╱
                    NO │
                       ▼
                   ( END )
```

B

A

FIG. 24

$(Tm+Ts) \times St$

Europäisches
Patentamt

European
Patent Office

Office européen
des brevets

# EUROPEAN SEARCH REPORT

Application Number

**EP 23 19 1617**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/362028 A1 (PROKHOROV DANIL V [US]) 20 December 2018 (2018-12-20) * paragraphs [0050], [0053], [0057], [0067] – [0069], [0079], [0081] * ----- | 1-8 | INV. G08G1/16 G08G1/01 G08G1/0967 B60W30/09 B60W30/095 |
| X | US 2012/161951 A1 (ITO TOSHIYUKI [JP] ET AL) 28 June 2012 (2012-06-28) * paragraphs [0005], [0041], [0046], [0050], [0055], [0062] * ----- | 1-8 | |
| X | US 2021/276589 A1 (ZHU XIAOXING [CN] ET AL) 9 September 2021 (2021-09-09) * paragraphs [0004] – [0036], [0044] – [0046], [0079], [0087] * ----- | 1-8 | |
| X | US 2021/188311 A1 (CHO EUNSUN [KR]) 24 June 2021 (2021-06-24) * paragraphs [0005], [0007], [0012] – [0013], [0357], [0362], [0408] – [0411] * ----- | 1-8 | |
| X | US 2021/122373 A1 (DAX VICTORIA MAGDALENA [US]) 29 April 2021 (2021-04-29) * paragraphs [0018], [0020], [0024], [0028], [0041], [0050], [0063], [0067] * ----- | 1-8 | **TECHNICAL FIELDS SEARCHED (IPC)** G08G B60W |

The present search report has been drawn up for all claims

| Place of search | Date of completion of the search | Examiner |
|---|---|---|
| The Hague | 24 January 2024 | Thareau-Berthet, N |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...........................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 19 1617

This annex lists the patent family members relating to the patent documents cited in the above-mentioned European search report.
The members are as contained in the European Patent Office EDP file on
The European Patent Office is in no way liable for these particulars which are merely given for the purpose of information.

24-01-2024

| Patent document cited in search report | Publication date | Patent family member(s) | Publication date |
|---|---|---|---|
| US 2018362028 A1 | 20-12-2018 | NONE | |
| US 2012161951 A1 | 28-06-2012 | JP 5338801 B2 | 13-11-2013 |
| | | JP 2012133686 A | 12-07-2012 |
| | | US 2012161951 A1 | 28-06-2012 |
| US 2021276589 A1 | 09-09-2021 | CN 109817021 A | 28-05-2019 |
| | | CN 113753081 A | 07-12-2021 |
| | | EP 3796285 A1 | 24-03-2021 |
| | | JP 2021527903 A | 14-10-2021 |
| | | US 2021276589 A1 | 09-09-2021 |
| | | WO 2020147486 A1 | 23-07-2020 |
| US 2021188311 A1 | 24-06-2021 | KR 20210082321 A | 05-07-2021 |
| | | US 2021188311 A1 | 24-06-2021 |
| US 2021122373 A1 | 29-04-2021 | CN 114600053 A | 07-06-2022 |
| | | EP 4049106 A1 | 31-08-2022 |
| | | JP 2022553310 A | 22-12-2022 |
| | | US 2021122373 A1 | 29-04-2021 |
| | | US 2022363256 A1 | 17-11-2022 |
| | | WO 2021081064 A1 | 29-04-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014002519 A
- JP 2022145035 A